(19) Europäisches Patentamt
European Patent Office
Office européen des brevets

(11) EP 2 208 764 B1

(12) EUROPEAN PATENT SPECIFICATION

(45) Date of publication and mention of the grant of the patent:
**21.08.2013 Bulletin 2013/34**

(51) Int Cl.:
***C09D 11/00*** *(2006.01)*

(21) Application number: **09180102.7**

(22) Date of filing: **21.12.2009**

# (54) Ink composition, ink set and ink-jet image forming method

Tintenzusammensetzung, Tintensatz und Tintenstrahlbilderzeugungsverfahren

Composition d'encre, jeu d'encre et procédé de formation d'images par jet d'encre

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **15.01.2009 JP 2009006733**

(43) Date of publication of application:
**21.07.2010 Bulletin 2010/29**

(73) Proprietor: **Fujifilm Corporation**
**Minato-ku**
**Tokyo (JP)**

(72) Inventors:
- **Ooishi, Yasufumi**
  **Kanagawa (JP)**
- **Irita, Kiyoshi**
  **Kanagawa (JP)**

(74) Representative: **HOFFMANN EITLE**
**Patent- und Rechtsanwälte**
**Arabellastrasse 4**
**81925 München (DE)**

(56) References cited:
**EP-A1- 0 984 046**
**EP-A1- 1 420 052**
**US-A1- 2005 007 432**
**US-A1- 2005 124 726**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 208 764 B1

## Description

BACKGROUND OF THE INVENTION

Technical Field

The present invention relates to an ink composition, an ink set and an ink-jet image forming method.

Description of the Related Art

Various methods have been proposed for image recording methods for recording color images in recent years. However, in all of these methods, improvements are still demanded with respect to the quality level of recorded objects in relation to, for example, quality of image, texture, curling properties after recording, and blocking resistance properties.

The ink-jet technique has been applied to office printers and household printers, and is recently increasingly being applied in the field of commercial printing. In the commercial printing field, printed sheets are required to have an appearance similar to that of printed sheets obtained by using general printing paper, rather than paper having a surface that completely blocks penetration of ink solvent into the base paper such as that of a photograph. However, when a solvent absorption layer of a recording medium has a thickness of from 20μm to 30μm, characteristics such as surface gloss, texture and stiffness are limited. Therefore, the application of ink-jet techniques to commercial printing has been limited to, for example, posters and forms, for which the restrictions on surface gloss, texture, stiffness and the like are tolerable.

Furthermore, a recording medium for exclusive use in ink-jet recording is expensive since it is provided with a solvent absorbing layer and a water resistant layer, and this is also a factor that limits the application of ink-jet technology in the field of commercial printing.

As an ink-jet recording method for forming high quality images, a number of image recording methods in which a liquid composition for improving images is used in addition to a usual ink-jet ink, and the liquid composition is deposited on a recording medium prior to the ejection of the ink-jet ink, have been proposed (see, for example, Japanese Patent Application Laid-Open (JP-A) No. 2004-59933). In these methods, the components of the ink-jet ink are aggregated on the surface of paper by the action of a fixing component in the ink, whereby the ink is fixed before dullness or bleeding occurs.

Further, as a measure for securing moisture retaining properties, a technique in which a high-boiling point and low-volatile solvent is used is known (see, for example, JP-A No. 2005-171094).

SUMMARY OF THE INVENTION

However, in the ink sets or techniques described above, when a recording medium is placed on a recording medium on which an images is already formed, blocking, which is a phenomenon in which the image on the lower recording medium is transferred to the rear face of the recording medium placed thereon, may occur.

The present invention has been made in view of the above circumstances, and provides an ink composition, an ink set including the ink composition, and an image forming method.

According to a first aspect of the present invention, an ink composition including a first solvent having a vapor pressure at 20°C of 0.1Pa or higher; resin particles having a glass transition temperature of 50°C or higher; and a coloring material, is provided.

According to a second aspect of the present invention, an ink set including at least one ink composition of the first aspect, is provided.

According to a third aspect of the present invention, an ink-jet image forming method, including supplying an ink-composition of the first aspect onto a recording medium by an ink-jet method to form an image, is provided.

DETAILED DESCRIPTION OF THE INVENTION

<*Ink Composition*>

The ink composition of the present invention includes a first solvent having a vapor pressure at 20°C of 0.1Pa or higher, at least one kind of resin particles having a glass transition temperature of 50°C or higher, and a at least one coloring material. The ink composition may further include additional component(s) as necessary.

The ink composition of the present invention includes the first solvent and the resin particles having a glass transition temperature equal to or higher than the specific temperature, and therefore, occurrence of blocking in the formed image may be effectively suppressed.

The ink composition of the present invention may be used not only for forming a monochromatic image but also for forming a image of multiple colors (for example, a full-color image), and images can be formed using one color or two or more colors. When forming a full-color image, the ink compositions may be used as a magenta-hue ink, a cyan-hue ink, and a yellow-hue ink. Further, for adjusting the hue, an ink composition as a black-hue ink may be used. Besides the inks of any color hue of yellow (Y), magenta (M), and cyan (C), the ink composition may be used as an ink composition of any hue of green (G), blue (B), and white (W). Further the ink composition may be used as so-called special color ink composition in the field of printing industry.
The ink composition of each color hue as described above may be prepared by appropriately selecting a coloring material (for example, a pigment) in view of its hue.

*Solvent*

The ink composition of the present invention includes at lest one first solvent having a vapor pressure at 20°C of 0.1 Pa or higher. When the solvent contained in the ink composition is volatile, the amount of the residual solvent in the image portion of the formed image may be reduced, and blocking resistance may be further effectively enhanced. In the present invention, from the view point of reducing the amount of the residual solvent in the image portion, the first solvent is preferably highly volatile. The first solvent more preferably has a vapor pressure at 20°C of from 0.1 Pa to 15 Pa, and even more preferably has a vapor pressure at 20°C of from 1.0 Pa to 10 Pa. When the vapor pressure at 20°C is 0.1 Pa or higher, the blocking resistance may be enhanced. When the vapor pressure at 20°C is 15 Pa or lower, the stability and ejectability of the ink composition may be enhanced.
The first solvent used in the present invention is, from the viewpoint of the ejection stability and ink stability, preferably a water-soluble solvent having a boiling point at ordinary pressure of from 200°C to 260°C, and is more preferably a water-soluble solvent having a boiling point at ordinary pressure of from 220°C to 245°C. Here, a "water-soluble solvent" refers to a solvent (for example, an organic solvent) of which 5 g or more is soluble in 100 g of water at a temperature of 25°C.
The first solvent is preferably an alkylene glycol derivative (alkylene glycol compound), and is more preferably oligo (alkylene glycol) or oligo(alkylene glycol) alkyl ether.
Among examples of the first solvent, specific examples of a solvent having a vapor pressure at 20°C of from 0.1 Pa to 15 Pa include tripropylene glycol monomethyl ether (TPGmME), triethylene glycol monoethyl ether (TEGmEE), diethylene glycol monoethyl ether (DEGmEE), and dipropylene glycol (DPG).
From the viewpoints of the blocking resistance and ink stability, preferable examples of a solvent having a vapor pressure at 20°C of from 0.1 Pa to 15 Pa include tripropylene glycol monomethyl ether (TPGmME, vapor pressure at 20°C of 2.7 Pa, b.p. (boling point) of 242°C), triethylene glycol monoethyl ether (TEGmEE, vapor pressure at 20°C of 0.3 Pa, b.p. (boling point) of 250°C), diethylene glycol monoethyl ether (DEGmEE, vapor pressure at 20°C of 13 Pa, b.p. (boling point) of 250°C), and dipropylene glycol (DPG, vapor pressure at 20°C of 1.3 Pa, b.p. (boling point) of 232°C). More preferable examples of a solvent having a vapor pressure at 20°C of from 0.1 Pa to 15 Pa include tripropylene glycol monomethyl ether (TPGmME), triethylene glycol monomethyl ether (TEGmEE) and dipropylene glycol (DPG), and even more preferable examples include tripropylene glycol monomethyl ether (TPGmME). One kind of these solvents may be used singly or two or more kinds of these solvents may be used in combination.
Among examples of the first solvent, specific examples of a first solvent having a vapor pressure at 20°C of 15 Pa or higher include alkyl alcohols having 1 to 4 carbon atoms, such as ethanol, methanol, butanol, propanol, and isopropanol; ethylene glycol monomethyl ether (EGmME); diethylene glycol monomethyl ether (DEGmME), dipropylene glycol monomethyl ether (DPGmME).
In the present invention, the content of the first solvent(s) in the ink composition is preferably from 1% by mass to 30% by mass, more preferably 3% by mass to 25% by mass, and even more preferably from 5% by mass to 20% by mass.
The ink composition of the present invention preferably includes a second solvent having a vapor pressure at 20°C of less than 0.1 Pa, in addition to the first solvent. When the ink composition further includes the second solvent, the offset resistance in the image forming and the image quality may be further effectively enhanced.
Specific examples of the second solvent include water-soluble organic solvents represented by the following Formula (1) and glucose derivatives (glucose compounds).
Among the examples of the second solvent, the second solvent is preferably at least one of the water-soluble organic solvent represented by the following Formula (1).

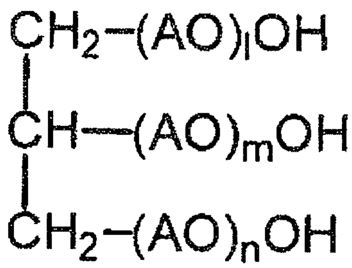

Formula (1)

In Formula (1), l, m and n are each independently an integer of 1 or more, and the sum of l, m and n is from 3 to 15, preferably from 3 to 12, and more preferably from 3 to 10. When the sum of l, m, and n is less than 3, the suppression of curling may be lowered in some cases. When the sum of l, m, and n exceeds 15, the ejectability may be lowered in some cases. AO represents at least one selected from the group consisting of an ethyleneoxy group (EO) and a propyleneoxy group (PO), and is preferably a propyleneoxy group. AO of $(AO)_l$, $(AO)_m$, and $(AO)_n$ may respectively be the same as or different from each other.

Specific examples of the compound represented by Formula (1) above include the compounds represented by the following chemical formula. In particular, POP (3) glyceryl ether and POP (6) glyceryl ether are preferable and POP (3) glyceryl ether (e.g., GP-250 (manufactured by Sanyo Chemical Industries, Ltd.)) is more preferable.

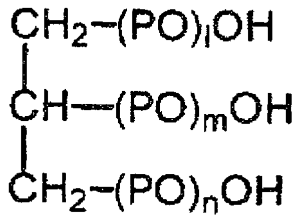

1 + m + n = 3 POP (3) glyceryl ether
1 + m + n = 4 POP (4) glyceryl ether
1 + m + n = 5 POP (5) glyceryl ether
1 + m + n = 6 POP (6) glyceryl ether
1 + m + n = 7 POP (7) glyceryl ether

The content of the second solvent is preferably from 20% by mass to 450% by mass and more preferably from 50 % by mass to 200% by mass relative to the first solvent.
The total content of the first solvent and the second solvent in the ink composition is preferably from 1% by mass to 30% by mass, more preferably from 3% by mass to 25% by mass, and still more preferably from 5% by mass to 20% by mass.

The ink composition of the invention may further contain additional water soluble organic solvents other than the first solvent and the second solvent insofar as the effects of the invention are not impaired. One kind of the additional water soluble organic solvents may be used singly or two or more kinds of the additional water soluble organic solvents may be used in combination.

The ink composition of the invention preferably contains water as a solvent. The content of water is not particularly limited. In particular, the content of water is preferably from 10% by mass to 99% by mass, more preferably from 30% by mass to 80% by mass, and still more preferably from 50% by mass to 70% by mass.

*Resin Particles*

The ink composition of the invention contains at least one kind of resin particles having a glass transition temperature of 50°C or higher. When the ink composition contains resin particles having a glass transition temperature higher than a specific temperature, the fixability of the ink composition to a recording medium and the blocking resistance, offset resistance, and scratch resistance of images to be formed can be effectively increased.

It is preferable that the resin particles have a function of fixing the ink composition, i.e., an image, by aggregating or destabilizing dispersion upon contact with a treating liquid described later or a paper area on which the treating liquid is dried to thereby increase the viscosity of ink. Such resin particles are preferably dispersed in at least one of water and an organic solvent.

The glass transition temperature of the resin particles is 50°C or higher in the invention. The glass transition temperature of the resin particles is preferably 80°C or higher, more preferably from 80°C to 300°C, still more preferably from 130°C to 250°C, and yet still more preferably from 160°C to 200°C. When the glass transition temperature of the resin particles to be contained is 50°C or higher, the blocking resistance of images to be formed may effectively improve. When the glass transition temperature of the resin particles is 300°C or lower, the scratch resistance of images to be formed may more effectively improve.

In the invention, the glass transition temperature of resin particles (polymer particles) can be controlled as appropriate by generally-used methods. For example, the glass transition temperature of resin particles can be controlled in a desired range by, selecting as appropriate the type of polymerizable groups of monomers used in the resin, the type and constituent ratio of substituents on the monomers, the molecular weight of polymer molecules constituting resin particles, etc.

In the invention, as the glass transition temperature, the measured Tg obtained by actual measurement is used. Specifically, the measured Tg refers to a value measured under usual measurement conditions using a differential scanning calorimeter (DSC) EXSTAR6220 (trade name) manufactured by SII Nanotechnology Inc.

When the measurement is difficult due to decomposition of resin or the like, the calculated Tg calculated by the following calculation formula is used. The calculated Tg was calculated by Equation (1).

$$1/Tg = \Sigma(X_i/Tg_i) \qquad (1)$$

In Equation (1), a polymer as a calculation target is assumed that n kinds of monomer components of i = 1 to n are copolymerized. Xi is the weight fraction ($\Sigma X_i = 1$) of the i-th monomer and $Tg_i$ is the glass transition temperature (absolute temperature) of a homopolymer of the i-th monomer. Σ is the sum of i = 1 to n. As the value (Tgi) of the glass transition temperature of a homopolymer of each monomer, the values described in "Polymer Handbook" (3rd Edition) (edited by J. Brandrup and E.H.Immergut (Wiley-Interscience, 1989)) are employed.

The resin particles in the invention are not particularly limited insofar as they have a desired glass transition temperature. Examples of the resin particles include resin particles of resin, such as thermoplastic acrylic, epoxy, polyurethane, polyether, polyamide, unsaturated polyester, phenol, silicone, or fluoro resin, polyvinyl resin, such as vinyl chloride, vinyl acetate, polyvinyl alcohol, or polyvinyl butyral, polyester resin, such as alkyd resin or phthalic resin, or copolymers or mixtures thereof.

As the resin particles in the invention, particles of a self-dispersing polymer particle (hereinafter, may be referred to as self-dispersing polymer particles) are preferred and self-dispersing polymer particles having a carboxyl group are more preferred, from a view point of the ejection stability and the liquid stability (particularly, dispersion stability) in a case of using a coloring material (particularly, pigment), which will be described below. The self-dispersing polymer particles mean particles of a water-insoluble polymer which can form a dispersed state in an aqueous medium by means of a functional group (particularly, an acidic group or a salt thereof) included in the polymer per se in the absence of an additional surfactant, and are water-insoluble polymer particles which do not contain an additional separate emulsifier.

The meaning of "dispersed state" includes an emulsified state where the water-insoluble polymer is dispersed in a liquid state in an aqueous medium (emulsion) and a dispersed state where the water-insoluble polymer is dispersed in a solid state in the aqueous medium (suspension).

The water-insoluble polymer in the invention is preferably such a water-insoluble polymer that can form a dispersed state where the water-insoluble polymer is dispersed in a solid state, from a view point of the aggregation speed and the fixing property when it is used in a liquid composition.

The dispersed state of the self-dispersing polymer particles means such a state where stable presence of a dispersed state can be confirmed visually at 25°C for at least one week after mixing and stirring a solution in which 30 g of a water-insoluble polymer is dissolved into 70 g of an organic solvent (for example, methyl ethyl ketone), a neutralizing agent capable of neutralizing a salt-forming group of the water-insoluble polymer to 100% (sodium hydroxide when the salt forming group is anionic or acetic acid when the group is cationic), and 200 g of water (apparatus: a stirrer equipped with a stirring blade, number of rotation: 200 rpm, 30 min, 25°C), and then removing the organic solvent from the liquid mixture.

The water-insoluble polymer means a polymer which is dissolved in an amount (amount of dissolution) of 10 g or less when the polymer is dried at 105°C for 2 hours and then dissolved in 100 g of water at 25°C. The amount of dissolution is, preferably, 5 g or less and, more preferably, 1 g or less. The amount of dissolution is the amount of

dissolution when the polymer is neutralized to 100% with sodium hydroxide or acetic acid in accordance with the kind of the salt-forming group of the water-insoluble polymer.

The aqueous medium contains water and may optionally contain a hydrophilic organic solvent. In the invention, the aqueous medium preferably includes water and the hydrophilic organic solvent in an amount of 0.2 % by mass or less relative to water and, more preferably, the aqueous medium consists of water.

The main chain skeleton of the resin used in the resin particles in the invention is not particularly limited and, for example, a vinyl polymer or a condensated type polymer (epoxy resin, polyester, polyurethane, polyamide, cellulose, polyether, polyurea, polyimide, polycarbonate, etc.) can be used. Among them, a vinyl polymer is particularly preferred. From the viewpoint of dispersion stability of the resin particles, (meth)acrylic resin particles are more preferred. (Meth)acrylic resin means methacrylic resin or acrylic resin.

Preferred examples of the vinyl polymer arid the monomer used for the vinyl polymer include those described in JP-A Nos. 2001-181549 and 2002-88294. Further, vinyl polymers introduced with a dissociative group to a terminal end of a polymer chain by radical polymerization of a vinyl monomer using a chain transfer agent, a polymerization initiator, or an iniferter having a dissociative group (or a substituent that can be induced to the dissociative group) or by ionic polymerization using a compound having a dissociative group (or substituent that can be induced to the dissociative group) to an initiator or a terminator can also be used.

Preferred examples of condensated type polymers and monomers used for the condensated type polymers include those described in JP-A No. 2001-247787.

The self-dispersing polymer particles in the invention preferably contain a water-insoluble polymer containing a hydrophilic constituent unit and, as a hydrophobic constituent unit, at least one of a constituent unit derived from an aromatic group-containing monomer and a constituent unit derived from an alicyclic monomer, from a viewpoint of the self-dispersibility.

The hydrophilic constituent unit is not particularly limited so long as it is derived from a hydrophilic group-containing monomer and it may be either a unit derived from one kind of hydrophilic group-containing monomer or a unit derived from two or more kinds of hydrophilic group-containing monomers. The hydrophilic group is not particularly limited and it may be either a dissociative group or a nonionic hydrophilic group.

In the invention, the hydrophilic group is preferably a dissociative group from a view point of promoting the self-dispersibility and a view point of stability of the formed emulsified or dispersed state and, more preferably, an anionic dissociative group. Examples of the dissociative group include a carboxyl group, a phosphoric acid group, and a sulfonic acid group and, among them, the carboxyl group is preferred from a viewpoint of the fixing property when the ink composition is formed.

The hydrophilic group-containing monomer in the invention is preferably a dissociative group-containing monomer and, preferably, a dissociative group-containing monomer having a dissociative group and an ethylenically unsaturated bond from a viewpoint of the self-dispersibility and the aggregation property.

Examples of the dissociative group-containing monomer include an unsaturated carboxylic acid monomer, an unsaturated sulfonic acid monomer, and an unsaturated phosphoric acid monomer.

Specific examples of the unsaturated carboxylic acid monomer include acrylic acid, methacrylic acid, crotonic acid, itaconic acid, maleic acid, fumaric acid, citraconic acid, and 2-methacryloyloxy methyl succinic acid, etc. Specific examples of the unsaturated sulfonic acid monomer include styrene sulfonic acid, 2-acrylamide-2-methylpropane sulfonic acid, 3-sulfopropyl(meth)acrylate, and bis(3-sulfopropyl)-itaconic acid ester. Specific examples of the unsaturated phosphoric acid monomer include vinyl phosphonic acid, vinyl phosphate, bis(methacryloyloxyethyl) phosphate, diphenyl-2-acryloyloxyethyl phosphate, diphenyl-2-methacryloyloxyethyl phosphate, and dibutyl-2-acryloyloxyethyl phosphate.

Among the dissociative group-containing monomers, the unsaturated carboxylic acid monomer is preferred and, acrylic acid and methacrylic acid are more preferred from a viewpoint of the dispersion stability and the ejection stability.

Examples of monomers having a nonionic hydrophilic group include: ethylenically unsaturated monomers containing a (poly)ethyleneoxy group or a polypropyleneoxy group, such as 2-methoxy ethyl acrylate, 2-(2-methoxyethoxy) ethyl acrylate, 2-(2-methoxyethoxy)ethyl methacrylate, ethoxytriethylene glycol methacrylate, methoxypolyethylene glycol (molecular weight of from 200 to 1,000) monomethacrylate, or polyethylene glycol (molecular weight of from 200 to 1,000) monomethacrylate; and ethylenically unsaturated monomers containing a hydroxyl group, such as hydroxymethyl (meth)acrylate, 2-hydroxyethyl(meth)acrylate, 2-hydroxypropyl(meth)acrylate, 4-hydroxybutyl(meth)acrylate, hydroxypentyl(meth)acrylate, or hydroxyhexyl(meth)acrylate.

The monomers containing a nonionic hydrophilic group are more preferably an ethylenically unsaturated monomer having alkyl ether at a terminal than an ethylenically unsaturated monomer having a hydroxyl group at a terminal from the viewpoint of the stability of the particles and the content of water soluble components.

With respect to the hydrophilic constituent unit in the invention, preferable examples of the polymer include those containing only a hydrophilic unit containing an anionic dissociative group as a hydrophilic constituent unit and those containing both a hydrophilic constituent unit containing an anionic dissociative group and a hydrophilic constituent unit containing a nonionic hydrophilic group.

Preferable examples of the polymer further include those containing two or more kinds of hydrophilic units each containing an anionic dissociative group, and those containing two or more kinds of hydrophilic constituent units including one or more kinds of hydrophilic constituent units each containing an anionic dissociative group and one or more kinds of hydrophilic constituent units each containing a nonionic hydrophilic group in combination.

The content of the hydrophilic constituent units in the self-dispersing polymer is preferably 25% by mass or lower, more preferably from 1% by mass to 25% by mass, still more preferably from 2% by mass to 23% by mass, and particularly preferably from 4 % by mass to 20% by mass, from the viewpoint of viscosity and stability over time of the ink composition.

When two or more kinds of hydrophilic constituent units are contained, the total content of the hydrophilic constituent units is preferably in the range mentioned above.

The content of the constituent unit containing an anionic dissociative group in the self-dispersing polymer is preferably in a range by which the acid value is in a preferable range described later.

The content of the constituent unit having a nonionic hydrophilic group is preferably from 0 to 25% by mass, more preferably from 0 to 20% by mass, and particularly preferably from 0 to 15% by mass from the viewpoint of ejection stability and stability over time.

The self-dispersing polymer particles in the invention preferably contain a polymer containing a carboxyl group and more preferably contain a polymer containing a carboxyl group and having an acid value (mgKOH/g) of from 25 to 100 from the viewpoint of self-dispersibility and an aggregation rate when contacting the treating liquid. Furthermore, the acid value is more preferably from 25 to 80 and particularly preferably from 30 to 65 from the viewpoint of self-dispersibility and an aggregation rate when contacting the treating liquid.

In particular, when the acid value is 25 or more, the stability of self-dispersibility becomes favorable and when the acid value is 100 or lower, aggregation properties increase.

The aromatic group-containing monomer is not particularly limited so long as it is a compound containing an aromatic group and a polymerizable group. The aromatic group may be either a group derived from an aromatic hydrocarbon or a group derived from an aromatic heterocyclic ring. In the invention, the aromatic group is preferably an aromatic group derived from the aromatic hydrocarbon, from a viewpoint of particle shape stability in the aqueous medium.

The polymerizable group may be either a polycondensating polymerizable group or an addition polymerizing polymerizable group. In the invention, the polymerizable group is preferably an addition polymerizing polymerizable group, and more preferably, a group containing an ethylenically unsaturated bond from a viewpoint of particle shape stability in the aqueous medium.

The aromatic group-containing monomer in the invention is preferably a monomer containing an aromatic group derived from an aromatic hydrocarbon and an ethylenically unsaturated bond. One kind of the aromatic group-containing monomer may be used singly or two or more kinds of the aromatic group-containing monomers may be used in combination.

Examples of the aromatic group-containing monomer include phenoxyethyl(meth)acrylate, benzyl(meth)acrylate, phenyl(meth)acrylate, and styrenic monomer. Among them, from a viewpoint of the balance between the hydrophilicity and the hydrophobicity of the polymer chain and the ink fixing property, an aromatic group-containing (meth) acrylate monomer is preferred, and at least one selected from the group consisting of phenoxyethyl(meth)acrylate, benzyl(meth)acrylate, and phenyl(meth)acrylate is more preferable and, phenoxyethyl(meth)acrylate and benzyl(meth) acrylate are still more preferred.

"(Meth)acrylate" means acrylate or methacrylate, "(meth)acrylamide" means acrylamide or methacrylamide, and "(meth) acrylic" means acrylic or methacrylic.

The self-dispersing polymer particles in the invention preferably contain a constituent unit derived from the aromatic group-containing (meth)acrylate monomer and the content thereof is, preferably, from 10 % by mass to 95 % by mass. When the content of the constituent unit derived from the aromatic group-containing (meth)acrylate monomer is from 10 % by mass to 95 % by mass, the stability of the self-emulsified or dispersed state is improved and, further, increase in the viscosity of an ink can be suppressed.

In the invention, the content of the constituent unit derived from the aromatic group-containing (meth)acrylate monomer in the self-dispersing polymer particles is, more preferably, from 15 % by mass to 90 % by mass, further preferably, from 15 % by mass to 80 % by mass and, particularly preferably, from 25 % by mass to 70 % by mass from a viewpoint of the stability of the self-dispersed state, stabilization for the shape of the particles in the aqueous medium due to hydrophobic inter-action between aromatic rings to each other, and lowering of the amount of the water-soluble component due to appropriate hydrophobic property of the particles.

When a styrene monomer is used as an aromatic group-containing monomer, the content of a constituent unit derived from a styrene monomer is preferably 20% by mass or lower, more preferably 10% by mass or lower, and still more preferably 5% by mass or lower, from the viewpoint of stability of self-dispersing polymer particles in which the monomer is used. It is further preferable that the self-dispersing polymer do not contain the constituent unit derived from a styrene monomer.

Here, the styrene monomer refers to styrene, substituted styrene ($\alpha$-methyl styrene, chlorostyrene, etc.), or a styrene macromer having a polystyrene structural unit.

The alicyclic monomer is not particularly limited insofar as it is a compound containing an alicyclic hydrocarbon group and a polymerizable group, and is preferably alicyclic(meth)acrylate from the viewpoint of dispersion stability.

The alicyclic(meth)acrylate has a structural portion derived from (meth)acrylic acid and a structural portion derived from alcohol, and the structural portion derived from alcohol contains at least one unsubstituted or substituted alicyclic hydrocarbon group. The alicyclic hydrocarbon group may be the structural portion derived from alcohol itself or may be bonded to the structural portion derived from alcohol via a linking group.

The "alicyclic(meth)acrylate" refers to methacrylate or acrylate having an alicyclic hydrocarbon group.

The alicyclic hydrocarbon group is not particularly limited insofar as it contains a cyclic non-aromatic hydrocarbon group. Examples thereof include a monocyclic hydrocarbon group, a bicyclic hydrocarbon group, and a polycyclic hydrocarbon group of tri- or higher cycle.

Examples of the alicyclic hydrocarbon group include cycloalkyl groups, such as a cyclopentyl group or a cyclohexyl group, a cyclo alkenyl group, a bicyclo hexyl group, a norbornyl group, an isobornyl group, a dicyclopentanil group, a dicyclopentenyl group, an adamanthyl group, a decahydronaphthalenyl group, a perhydro fluorenyl group, and a tricyclo $[5.2.1.0^{2,6}]$decanyl group, and bicyclo[4.3.0]nonane.

The alicyclic hydrocarbon group may further have a substituent. Examples of the substituent include an alkyl group, an alkenyl group, an aryl group, an aralkyl group, an alkoxy group, a hydroxy group, a primary amino group, a secondary amino group, a tertiary amino group, an alkyl carbonyl group, an aryl carbonyl group, and a cyano group.

The alicyclic hydrocarbon group may further form a condensed ring.

The alicyclic hydrocarbon group in the invention preferably has an alicyclic hydrocarbon group portion having 5 to 20 carbon atoms from the viewpoint of viscosity and solubility.

Examples of a linking group for bonding the alicyclic hydrocarbon group to the structural portion derived from alcohol include an alkyl group, an alkenyl group, an alkylene group, an aralkyl group, an alkoxy group, a mono- or oligoethylene glycol group, and a mono- or oligo- propylene glycol group, each having 1 to 20 carbon atoms.

Specific example of the alicyclic(meth)acrylate in the invention are shown below, but the invention is not limited thereto.

Examples of the monocyclic(meth)acrylate include cyeloalkyl(meth)acrylate having a cycloalkyl group having 3 to 10 carbon atoms, such as cyclopropyl(meth)acrylate, cyclobutyl(meth)acrylate, cyclopentyl(meth)acrylate, cyclohexyl(meth) acrylate, cycloheptyl(meth)acrylate, cyclooctyl(meth)acrylate, cyclononyl(meth)acrylate, and cyclodecyl(meth)acrylate.

Examples of the bicyclic(meth)acrylate include isobornyl(meth)acrylate and norbornyl(meth)acrylate.

Example of the tricyclic(meth)acrylate include adamanthyl(meth)acrylate, dicyclopentanil(metha)acrylate, and dicyclopentenyloxyethyl(meth)acrylate.

One kind of the alicyclic(meth)acrylate may be used singly or two or more kinds of the alicyclic(meth)acrylate may be used as a mixture.

Among the above, from the viewpoint of the dispersion stability of the self-dispersing polymer particles, fixability, and blocking resistance, at least either one of the bicyclic(meth)acrylate or the polycyclic(meth)acrylate of tri- or higher cycle is preferable and at least one selected from isobomyl(meth)acrylate, adamanthyl(meth)acrylate, and dicyclopentanil (meth)acrylate is more preferable.

In the invention, the content of the constituent unit derived from the alicyclic(meth)acrylate contained in the self-dispersing polymer particles is preferably from 20% by mass to 90% by mass and more preferably from 40% by mass to 90% by mass from the viewpoint of the stability of a self-dispersion state, stabilization of the particle shape in an aqueous medium due to hydrophobic interaction of alicyclic hydrocarbon groups, and reduction in the amount of water-soluble components due to appropriate hydrophobizing of particles. The content thereof is particularly preferably from 50% by mass to 80% by mass.

When the content of the constituent unit derived from alicyclic(meth)acrylate is 20% by mass or more, fixability and blocking may be improved. In contrast, when the constituent unit derived from alicyclic(meth)acrylate is 90% by mass or lower, the stability of polymer particles may be improved.

The self-dispersing polymer particles in the invention may optionally include, for example, as a hydrophobic constituent unit, additional constituent unit(s), in addition to a constituent unit derived from an aromatic group-containing monomer and a constituent unit derived from an alicyclic monomer.

The monomer which may be used for forming the additional constituent unit (hereinafter, may also be referred to as an "additional copolymerizable monomer") is not particularly limited so long as it is a monomer copolymerizable with the hydrophilic group-containing monomer, the aromatic group-containing monomer and the alicyclic monomer. An alkyl group-containing monomer is preferred from a viewpoint of the flexibility of the polymer skeleton or easiness in control for the glass transition temperature (Tg).

Examples of the alkyl group-containing monomer include alkyl(meth)acrylates such as methyl(meth)acrylate, ethyl(meth)acrylate, isopropyl(meth)acrylate, n-propyl(meth)acrylate, n-butyl(meth)acrylate, isobutyl(meth)acrylate, t-butyl(meth)acrylate, hexyl(meth)acrylate, and ethylhexyl(meth)acrylate; ethylenically unsaturated monomers having a hydroxyl group such as hydroxymethyl(meth)acrylate, 2-hydroxyethyl(meth)acrylate,2-hydroxypropyl(meth)acrylate, 4-hydroxybutyl(meth)acrylate, hydorxypentyl(meth)acrylate, and hydroxyhexyl(meth)acrylate; dialkylamino alkyl(meth) acrylates such as dimethylaminoethyl(meth)acrylate; (meth)acrylamides, for example, N-hydroxyalkyl(meth)acrylamide such as N-hydroxymethyl(meth)acrylamide, N-hydroxyethyl(meth)acrylamide, and N-hydroxybutyl(meth)acrylamide; and N-alkoxyalkyl(meth)acrylamides such as N-methoxymethyl(meth)acrylamide, N-ethoxymethyl(meth)acrylamide, N-(n-, iso)butoxymethyl(meth)acrylamide, N-methoxyethyl(meth)acrylamide, N-ethoxyethyl(meth)acrylamide, and N-(n-, iso)butoxyethyl(meth)acrylamide.

In particular, from the viewpoint of the flexibility of a polymer skeleton or ease of control of the glass transition temperature (Tg) and from the viewpoint of dispersion stability of a self-dispersing polymer, at least one of (meth)acrylates containing a chain alkyl group having 1 to 8 carbon atoms is preferable, (meth)acrylates containing a chain alkyl group having 1 to 4 carbon atoms are more preferable, and methyl(aneth)acrylate or ethyl(meth)acrylate is particularly preferably. Here, the chain alkyl group refers to an alkyl group having a straight chain or a branched chain.

In the invention, one kind of the additional copolymerizable monomers may be used singly or two or more kinds of the additional copolymerizable monomers may be used in combination.

When the self-dispersing polymer particles contain the additional constituent units, the content thereof is preferably 10 to 80% by mass, more preferably 15 to 75% by mass, and particularly preferably 20 to 70% by mass. When two or more kinds of monomers are used in combination for forming the additional constituent unit(s), the total content thereof is preferably in the range described above.

The self-dispersing polymer in the invention is also preferably a polymer obtained by polymerizing at least three kinds of substances of at least either one of aromatic group-containing (meth)acrylate or alicyclic(meth)acrylate, an additional copolymerizable monomer, and a hydrophilic group-containing monomer, from the viewpoint of dispersion stability, and more preferably a polymer obtained by polymerizing at least three kinds of substances of at least either one of aromatic group-containing (meth)acrylate or alicyclic(meth)acrylate, (meth)acrylate containing a straight chain or branched chain alkyl group having 1 to 8 carbon atoms, and a hydrophilic group-containing monomer.

In the invention, the self-dispersing polymer is preferably a self-dispersing polymer which does not substantially contain a constituent unit having a substituent having high hydrophobicity such as a constituent unit derived from (meth)acrylate having a straight chain or branched chain alkyl group having 9 or more carbon atoms, a constituent unit derived from an aromatic group-containing macromonomer or the like, and the self-dispersing polymer is more preferably a self-dispersing polymer which does not contain a constituent unit having a substituent having high hydrophobicity such as a constituent unit derived from (meth)acrylate having a straight chain or branched chain alkyl group having 9 or more carbon atoms, a constituent unit derived from an aromatic group-containing macromonomer or the like, from the viewpoint of dispersion stability.

The self-dispersing polymer in the invention may be a random copolymer in which each constituent unit is irregularly introduced or a block copolymer in which each constituent unit is regularly introduced. In the case of a block copolymer, each constituent unit may be synthesized in any introduction order and the same constituent may be used twice or more.

A random copolymer is preferable in terms of versatility and manufacturability.

The molecular weight of the self-dispersing polymer in the invention is, preferably, from 3,000 to 200,000 and, more preferably, from 5,000 to 150,000 and, further preferably, from 10,000 to 100,000 as the weight average molecular weight. Further, the self-dispersing polymer preferably has an acid value of from 25 to 100 and a weight average molecular weight of from 3,000 to 200,000, and the self-dispersing polymer more preferably has an acid value of from 25 to 95 and a weight average molecular weight of from 5,000 to 150,000. When the weight average molecular weight is 3,000 or more, the amount of the water-soluble component can be suppressed effectively. Further, when the weight average molecular weight is 200,000 or less, the self-dispersion stability can be increased.

The weight average molecular weight is measured by gel permeation chromatography (GPC). In GPC, HLC-8020GPC (manufactured by Tosoh Corporation) is used, and 3 pieces of colums of TSKgel Super HZM-H, TSK gel Super HZ4000 and TSK gel Super HZ200 (trade names, manufactured by Tosoh Corporation, 4.6 mm ID x 15 cm) are used, and THF (tetrahydrofuran) is used as an eluate. Measurement is performed by using an RI detector under the conditions at a sample concentration of 0.35 % by mass, a flow rate of 0.35 mL/min, a sample ejection amount of 10 μL, and a measuring temperature of 40°C. A calibration curve is prepared based on eight samples of "standard sample: TSK standard polystyrene" of "F-40", "F-20", "F-4", "F-1", "A-5000", "F-2500", "A-1000", and "n-propylbenzene" manufactured by Tosoh Corporation.

It is preferable that the self-dispersing polymer in the invention contains a structural unit derived from an aromatic group-containing (meth)acrylate monomer (preferably, structural unit derived from phenoxyethyl(meth)acrylate and/or structural unit derived from benzyl(meth)acrylate) in a ratio of from 15 to 80 % by mass as the copolymerization ratio based on the entire mass of the self-dispersing polymer particles, and has an acid value of from 25 to 100 and a weight average molecular weight of from 3,000 to 200,000, from a viewpoint of controlling the hydrophilicity and hydrophobicity

of the polymer.
Further, the self-dispersing polymer preferably contains a constituent unit derived from an aromatic group-containing (meth)acrylate monomer in a ratio of from 15 to 80 % by mass as the copolymerization ratio, a constituent unit derived from a carboxyl group-containing monomer, and a constituent unit derived from an alkyl group-containing monomer (preferably, constituent unit derived from (meth)acrylic acid alkyl ester). It is more preferable that the self-dispersing polymer contains a structural unit derived from phenoxyethyl(meth)acrylate and/or structural unit derived from benzyl (meth)acrylate in a ratio of from 15 to 80 % by mass as the copolymerization ratio, a constituent unit derived from a carboxyl group-containing monomer, and a constituent unit derived from an alkyl group-containing monomer (preferably, a structural unit derived from an ester of alkyl having 1 to 4 carbon atoms of (meth)acrylic acid) and has an acid value of from 25 to 95 and a weight average molecular weight of from 5,000 to 150,000.

The self-dispersing polymer of the invention is also preferably a vinyl polymer containing at least one of a structure derived from alicyclic(meth)acrylate in the proportion of from 20% by mass to 90% by mass as a copolymerization ratio, a structure derived from a dissociative group-containing monomer, and a structure derived from (meth)acrylate containing a chain alkyl group having 1 to 8 carbon atoms, having an acid value of 20 to 120, having a total content of hydrophilic structural units of 25% by mass or lower, and having a weight average molecular weight of 3000 to 200,000, from the viewpoint of control of hydrophilicity/hydrophobicity of the polymer.
The self-dispersing polymer of the invention is more preferably a vinyl polymer containing a structure derived from bicyclic (meth)acrylate or polycyclic (meth)acrylate of tri- or higher cycle in the proportion of from 30% by mass to 90% by mass as a copolymerization ratio, a structure derived from (meth)acrylate containing a chain alkyl group having 1 to 4 carbon atoms in the proportion of from 10% by mass to 80% by mass as a copolymerization ratio, and a structure derived from a carboxyl group-containing monomer so that the acid value is in the range of 25 to 100, having a total content of hydrophilic structural units of 25% by mass or lower, and having a weight average molecular weight of 10,000 to 200,000.
The self-dispersing polymer of the invention is more preferably a vinyl polymer containing a structure derived from bicyclic (meth)acrylate or polycyclic (meth)acrylate of tri- or higher cycle in the proportion of from 40% by mass to 80% by mass as a copolymerization ratio and at least a structure derived from methyl(meth)acrylate or ethyl(meth)acrylate in the proportion of from 20% by mass to 70% by mass as a copolymerization ratio, containing a structure derived from acrylic acid or methacrylic acid so that the acid value is in the range of from 30 to 80, having a total content of hydrophilic structural units of 25% by mass or lower, and having a weight average molecular weight of 30000 to 150,000.

As specific examples of polymers used in the resin particles, aromatic group-containing polymers and alicyclic group-containing polymers will be shown below, but the invention is not limited thereto. The ratio in the brackets indicates the mass ratio of copolymerization components.

Aromatic Group-Containing Polymer

- Phenoxy ethyl acrylate/Methyl methacrylate/Acrylic acid copolymer (20/70/10), Glass transition temperature Tg of 71°C
- Phenoxy ethyl acrylate/Benzyl methacrylate/Isobutyl methacrylate/Methacrylic acid copolymer (14/32/48/6), Glass transition temperature Tg of 51°C
- Phenoxy ethyl methacrylate/Isobutyl methacrylate/Methacrylic acid copolymer (30/64/6), Glass transition temperature Tg of 51°C
- Phenoxy ethyl acrylate/Methyl methacrylate/Ethyl acrylate/Acrylic acid copolymer (20/65/10/5), Glass transition temperature Tg of 56°C
- Benzyl methacrylate/Isobutyl methacrylate/Methacrylic acid copolymer (35/59/6), Glass transition temperature Tg of 67°C
- Styrene/Phenoxy ethyl acrylate/Methyl methacrylate/Acrylic acid copolymer (10/30/55/5), Glass transition temperature Tg of 56°C
- Benzyl acrylate/Methyl methacrylate/Acrylic acid copolymer (40/55/5), Glass transition temperature Tg of 58°C
- Styrene/Phenoxy ethyl acrylate/Butyl methacrylate/Acrylic acid copolymer (53/20/20/7), Glass transition temperature Tg of 53°C
- Benzyl methacrylate/Isobutyl methacrylate/Cyclohexyl methacrylate/Methacrylic acid copolymer (35/30/30/5), Glass transition temperature Tg of 66°C
- Benzyl acrylate/Isobutyl methacrylate/Acrylic acid copolymer (25/67/8), Glass transition temperature Tg of 52°C
- Styrene/Phenoxy ethyl methacrylate/Butyl acrylate/Acrylic acid copolymer (50/5/20/25), Glass transition temperature Tg of 50°C
- Styrene/Butyl acrylate/Acrylic acid copolymer (77/20/3), Glass transition temperature Tg of 57°C
- Methyl methacrylate/Phenoxy ethyl acrylate/Acrylic acid copolymer (76/20/4), Glass transition temperature Tg of 71°C
- Methyl methacrylate/Phenoxy ethyl acrylate/Acrylic acid copolymer (74/20/6), Glass transition temperature Tg of 71 °C

· Methyl methacrylate/Phenoxy ethyl acrylate/Acrylic acid copolymer (73/20/7), Glass transition temperature Tg of 71°C
· Methyl methacrylate/Phenoxy ethyl acrylate/Acrylic acid copolymer (72/20/8), Glass transition temperature Tg of 71°C
· Methyl methacrylate/Phenoxy ethyl acrylate/Acrylic acid copolymer (74/16/10), Glass transition temperature Tg of 77°C

Alicyclic Group-Containing Polymer)

· Methyl methacrylate/Isobornyl methacrylate/Methacrylic acid copolymer (20/72/8), Glass transition temperature Tg of 180°C
· Methyl methacrylate/Isobornyl methacrylate/Methacrylic acid copolymer (30/62/8), Glass transition temperature Tg of 170°C
· Methyl methacrylate/Isobornyl methacrylate/Methacrylic acid copolymer (40/52/8), Glass transition temperature Tg of 160°C
· Methyl methacrylate/Isobornyl methacrylate/Methacrylic acid copolymer (50/42/8), Glass transition temperature Tg of 150°C
· Methyl methacrylate/Isobornyl methacrylate/Benzyl methacrylate/Methacrylic acid copolymer (30/50/14/6), Glass transition temperature Tg of 123°C
· Methyl methacrylate/Dicyclopentanil methacrylate/Methacrylic acid copolymer (40/50/10), Glass transition temperature Tg of 130°C
· Methyl methacrylate/Dicyclopentanil methacrylate/Phenoxy ethyl methacrylate/Methacrylic acid copolymer (30/50/14/6), Glass transition temperature Tg of 101°C
· Methyl methacrylate/Isobornyl methacrylate/Methoxypolyethylene glycol methacrylate (n = 2)/Methacrylic acid copolyner (30/54/10/6), Glass transition temperature Tg of 110°C
· Methyl methacrylate/Dicyclopentanil methacrylate/Methoxypolyethylene glycol methacrylate (n = 2)/Methacrylic acid copolymer (54/35/5/6), Glass transition temperature Tg of 100°C
· Methyl methacrylate/Adamantyl methacrylate/Methoxypolyethylene glycol methacrylate (n = 23)/Methacrylic acid copolymer (30/50115/5), Glass transition temperature Tg of 112°C
· Methyl methacrylate/Isobornyl methacrylate/Dicyclopentanil methacrylate/Methacrylic acid copolymer (20/50/22/8), Glass transition temperature Tg of 139°C
· Ethyl methacrylate/Cyclohexyl methacrylate/Acrylic acid copolymer (50/45/5), Glass transition temperature Tg of 67°C
· Isobutyl methacrylate/Cyclohexyl methacrylate/Acrylic acid copolymer (40/50110), Glass transition temperature Tg of 70°C
· n-butyl methacrylate/Cyclohexyl methacrylate/Styrene/Acrylic acid copolymer (30/55/10/5), Glass transition temperature Tg of 86°C
· Methyl methacrylate/Dicyclopentenyloxyethyl methacrylate/Methacrylic acid copolymer (40/52/8), Glass transition temperature Tg of 78°C
· Lauryl methacrylate/Dicyclopentenyloxyethyl methacrylate/Methacrylic acid copolymer (3/87/10), Glass transition temperature Tg of 53°C

The method of producing a water-insoluble polymer that is used in the resin particle in the invention is not particularly limited. Examples of the method of producing the water-insoluble polymer include a method of performing emulsion polymerization under the presence of a polymerizable surfactant thereby covalently-bonding the surfactant and the water-insoluble polymer and a method of copolymerizing a monomer mixture containing the hydrophilic group-containing monomer and the aromatic group-containing monomer by a known polymerization method such as a solution polymerization method or a bulk polymerization method. Among the polymerization methods described above, the solution polymerization method is preferred and a solution polymerization method in which an organic solvent is used is more preferred from a viewpoint of aggregation speed and the stability of droplet ejection of the ink composition.
From a viewpoint of the aggregation speed, it is preferred that the self-dispersing polymer particles in the invention contain a polymer synthesized in an organic solvent, and the polymer has a carboxyl group (the acid value is preferably from 20 to 100), in which the carboxyl groups of the polymer are partially or entirely neutralized and the polymer is prepared as a polymer dispersion in a continuous phase of water. That is, the self-dispersing polymer particle in the invention is prepared by a method including a step of synthesizing the polymer in the organic solvent and a dispersion step of forming an aqueous dispersion in which at least a portion of the carboxyl groups of the polymer is neutralized.
The dispersion step preferably includes the following step (1) and step (2).

Step (1): step of stirring a mixture containing a polymer (water-insoluble polymer), an organic solvent, a neutralizing agent, and an aqueous medium,
Step (2): step of removing the organic solvent from the mixture.

The step (1) preferably a treatment that includes at first dissolving the polymer (water-insoluble polymer) in the organic solvent and then gradually adding the neutralizing agent and the aqueous medium, and mixing and stirring the mixture to obtain a dispersion. By adding the neutralizing agent and the aqueous medium to the solution of the water-insoluble polymer dissolved in the organic solvent, self-dispersing polymer particles having a particle size that enables higher storage stability can be obtained without requiring strong sharing force.
The stirring method for stirring the mixture is not particularly limited and a mixing and stirring apparatus that is used generally can be used, and optionally, a disperser such as a ultrasonic disperser or a high pressure homogenizer can be used.
Preferable examples of the organic solvent include alcohol type solvents and ketone type solvents.
Examples of the alcohol type solvent include isopropyl alcohol, n-butanol, t-butanol, and ethanol. Examples of the ketone type solvent include acetone, methyl ethyl ketone, diethyl ketone, and methyl isobutyl ketone. Examples of the ether type solvent include dibutyl ether and dioxane. Among the solvents, the ketone type solvent such as methyl ethyl ketone and the alcohol type solvent such as isopropyl alcohol are preferred. Further, with an aim of moderating the change of polarity at the phase transfer from an oil system to an aqueous system, combined use of isopropyl alcohol and methyl ethyl ketone is also preferred. By the combined use of the solvents, self-dispersing polymer particles of small particle size with no aggregation settling or fusion between particles to each other and having high dispersion stability may be obtained.
The neutralizing agent is used to partially or entirely neutralize the dissociative groups so that the self-dispersing polymer can form a stable emulsified or dispersed state in water. In a case where the self-dispersing polymer of the invention has an anionic dissociative group (for example, carboxyl group) as the dissociative group, examples of the neutralizing agent to be used include basic compounds such as organic amine compounds, ammonia, and alkali metal hydroxides. Examples of the organic amine compounds include monoethyl amine, dimethyl amine, trimethyl amine, monoethyl amine, diethyl amine, triethyl amine, monopropyl amine, dipropyl amine, monoethanol amine, diethanol amine, triethanol amine, N,N-dimethyl-ethanol amine, N,N-diethyl-ethanol amine, 2-dimethylamino-2-methyl-1-propanol, 2-amino-2-methyl-1-propanol, N-methyldiethanol amine, N-ethyldiethanol amine, monoisopropanol amine, diisopropanol amine, and triisopropanol amine, etc. Examples of the alkali metal hydroxide include lithium hydroxide, sodium hydroxide and potassium hydroxide. Among them, sodium hydroxide, potassium hydroxide, triethylamine, and triethanol amine are preferred from a viewpoint of the stabilization of dispersion of the self-dispersing polymer particles of the invention into water.
The basic compound is used preferably in an amount of from 5 to 120 mol%, more preferably, from 10 to 110 mol%, and further preferably, from 15 to 100 mol%, relative to 100 mol% of the dissociative groups. When the basic compound is used in an amount of 15mol% or more, the effect of stabilizing the dispersion of the particles in water may be obtained and when the basic compound is in an amount of 100% or less, the effect of decreasing the water-soluble component may be provided.
In the step (2), an aqueous dispersion of the self-dispersing polymer particles can be obtained by phase transfer to the aqueous system by distilling off the organic solvent from the dispersion obtained in the step (1) by a common method such as distillation under a reduced pressure. In the obtained aqueous dispersion, the organic solvent has been substantially removed and the amount of the organic solvent is preferably from 0.2 % by mass or less and, more preferably, 0.1 % by mass or less.
The average particle size of the resin particles is, as a volume average particle size, preferably in the range of 10 nm to 1 μm, more preferably in the range of from 10 nm to 200 nm, even more preferably in the range of from 10 nm to 100 nm, and particularly preferably in the range of from 10 nm to 50 nm. When the volume average particle size is 10 nm or more, production suitability may be enhanced, and when the volume average particle size is 1 μm or less, storage stability may be enhanced.
The particle size distribution of the resin particles is not particularly limited, and any of those particles having a broad particle size distribution or those particles having a monodisperse particle size distribution may be used. Two or more kinds of water-insoluble particles may be used as mixtures.
The average particle size and particle size distribution of the resin particles are determined by measuring the volume average particle size by a dynamic light scattering method, using a NANOTRACK particle size distribution analyzer (model name: UPA-EX150, manufactured by Nikkiso Co., Ltd.).
One kind of the resin particles (particularly, the self-dispersing polymer particles) may be used singly, or two or more kinds of the resin particles may be used as mixtures.
The content of the resin particles in the ink composition is preferably from 0.5 to 20% by mass, more preferably from 2 to 20% by mass, and even more preferably from 3 to 15% by mass, relative to the total mass of the ink composition.

*Coloring Material*

The ink composition of the present invention includes at least one coloring material. The coloring material may have a function of forming an image by coloring, and examples thereof include a pigment, a dye, and colored particles. Among these, the coloring material is preferably a pigment, more preferably a water-dispersible pigment, and even more preferably a pigment coated with a water-insoluble polymer dispersant.
Specific examples of the water-dispersible pigment include the following pigments, of (1) to (4).

(1) An encapsulated pigment, that is, a polymer dispersion in which a pigment is incorporated in polymer particles. More specifically, the encapsulated pigment is a pigment coated with a hydrophilic and water-insoluble resin and has hydrophilicity due to the resin layer provided on the surface of the pigment, and therefore, the encapsulated pigment is dispersible in water (hereinafter, the encapsulated pigment may also be referred to as a "resin-coated pigment").
(2) A self-dispersing pigment, that is, a pigment which has at least one kind of hydrophilic group at the surface, and exhibits at least any of water-solubility and water-dispersibility in the absence of dispersant. More specifically, the self-dispersing pigment is a pigment produced mainly by subjecting carbon black or the like to a surface oxidation treatment to render the pigment hydrophilic, and thus making the pigment per se to disperse in water.
(3) A resin-dispersed pigment, that is, a pigment dispersed by a water-soluble polymer compound having a weight average molecular weight of 50,000 or less.
(4) A surfactant-dispersed pigment, that is, a pigment dispersed by a surfactant.
Among these, preferred are the (1) encapsulated pigment and (2) self-dispersing pigment, and particularly preferred is the (1) encapsulated pigment.

Here, the (1) encapsulated pigment will be described in detail.
The resin for the encapsulated pigment (hereinafter, the resin for the encapsulated pigment may also be referred to as a "water-insoluble polymer dispersant") is not limited, but the resin is preferably a polymer compound having self-dispersing ability or dissolving ability in a mixed solvent of water and a water-soluble organic solvent, and having an anionic group (acidic). Usually, this resin preferably has a number average molecular weight in the range of about 1,000 to about 100,000, and more preferably in the range of about 3,000 to about 50,000. It is also preferable that this resin be dissolved in an organic solvent to form a solution. When the number average molecular weight of the resin is within this range, the resin may exhibit its function as a coating layer for the pigment, or as a coating layer when used in an ink. The resin is preferably used in the form of a salt of an alkali metal or an organic amine.
Specific examples of the resin for the encapsulated pigment include materials having an anionic group, such as thermoplastic, thermosetting or modified acrylic, epoxy-based, polyurethane-based, polyether-based, polyamide-based, unsaturated polyester-based, phenolic, silicone-based or fluorine-based resins; polyvinyl-based resins such as vinyl chloride, vinyl acetate, polyvinyl alcohol or polyvinyl butyral; polyester-based resins such as alkyd resins and phthalic acid resins; amino-based materials such as melamine resins, melamine-formaldehyde resins, aminoalkyd co-condensated resins, urea resins, and urea resins; or copolymers or mixtures thereof.
The anionic acrylic resins may be obtained by, for example, polymerizing an acrylic monomer having an anionic group (hereinafter, referred to as "anionic group-containing acrylic monomer") and if necessary, another monomer capable of being copolymerized with the anionic group-containing acrylic monomer, in a solvent. Examples of the anionic group-containing acrylic monomer include acrylic monomers having one or more anionic groups selected from the group consisting of a carboxyl group, a sulfonic acid group and a phosphonic acid group, and among them, acrylic monomers having a carboxyl group are particularly preferred.
Specific examples of the acrylic monomer having a carboxyl group include acrylic acid, methacrylic acid, crotonic acid, ethacrylic acid, propylacrylic acid, isopropylacrylic acid, itaconic acid, fumaric acid. Among these, acrylic acid or methacrylic acid is preferred.
The encapsulated pigment may be produced by a conventional physical or chemical method, using the above-described components. For example, the encapsulated pigment may be produced by the methods described in JP-A Nos. 9-151342, 10-140065, 11-209672, 11-172180, 10-25440 or 11-43636.
Specific examples of the method include the phase inversion emulsification method and acid precipitation method described in JP-A Nos. 9-151342 and 10-140065, respectively, and among them, the phase inversion emulsification method is preferred in view of dispersion stability. The phase inversion emulsification method will be described later.
The aforementioned self-dispersing pigment is also one of preferred examples. The self-dispersing pigment is a pigment which has a large number of hydrophilic functional groups and/or salts thereof (hereinafter, referred to as "dispersibility imparting group") bonded to the pigment surface directly or indirectly via an alkyl group, an alkyl ether group, an aryl group or the like, and is capable of dispersing in an aqueous medium without using a dispersant for pigment dispersion. Here, the term "dispersing in an aqueous medium without using a dispersant" implies that the pigment

is capable of being dispersed in an aqueous medium even though a dispersant for dispersing pigments is not used. Since an ink containing a self-dispersing pigment as the colorant does not need to include a dispersant which is usually incorporated to disperse pigments, it is possible to easily prepare an ink in which foaming due to decrease in the defoaming property caused by the dispersant (that is, foaming associated with the use of the dispersant) scarcely occur, and which has excellent ejection stability. Examples of the dispersibility imparting group that is bonded to the surface of the self-dispersing pigment include -COOH, -CO, -OH, $-SO_3H$,

- $PO_3H_2$ and quaternary ammonium, and salts thereof. The dispersibility imparting group may be bonded to the surface of the pigment by applying a physical treatment or a chemical treatment to the pigment, thereby bonding (grafting) the dispersibility imparting group or an active species having a dispersibility imparting group to the pigment surface. As the physical treatment, examples thereof include vacuum plasma treatment. Examples of the chemical treatment include a wet oxidation method of oxidizing the pigment surface in water by an oxidizing agent; a method of bonding a carboxyl group via a phenyl group by bonding p-aminobenzoic acid to the pigment surface.
  The self-dispersing pigment may be, for example, a self-dispersing pigment which is surface treated by an oxidation treatment using hypohalous acid and/or hypohalite, or an oxidation treatment using ozone.
  As the self dispersing pigment, a commercially available product may be used, and examples of the commercially available self-dispersing pigment include MICROJET CW-1 (trade name; manufactured by Orient Chemical Industries, Ltd.), CAB-O-JET200, CAB-O-JET300 (trade name; manufactured by Cabot Corp.).

Here, the phase inversion emulsification method will be described.
a) Phase Inversion Emulsification Method
The phase inversion emulsification method is a self-dispersing (phase inversion emulsification) method in which a mixed molten product of a pigment and a resin having a self-dispersing ability or dissolving ability, is dispersed in water. This mixed molten product may include a curing agent or a polymer compound. Here, the mixed molten product may be a state in which ingredients are mixed but are not dissolved, a state in which ingredients are dissolved and mixed, or a state in which these two states are included. Specific examples of a production method of the "phase inversion emulsification method" include a method described in JP-A No. 10-140065.

Pigment

The pigment used in the invention is not particularly limited, and may be appropriately selected according to the purpose, and for example, any of organic pigments and inorganic pigments may be used.
Examples of the organic pigments include azo pigments, polycyclic pigments, dye chelates, nitro pigments, nitroso pigments, aniline black. Among these, azo pigments and polycyclic pigments are more preferred.
Examples of the azo pigments include azo lakes, insoluble azo pigments, condensed azo pigments, chelate azo pigments. Examples of the polycyclic pigments include phthalocyanine pigments, perylene pigments, perinone pigments, anthraquinone pigments, quinacridone pigments, dioxazine pigments, indigo pigments, thioindigo pigments, isoindolinone pigments, quinophthalone pigments. Examples of the dye chelates include basic dye type chelates, acidic dye type chelates.
Examples of the inorganic pigments include titanium oxide, iron oxide, calcium carbonate, barium sulfate, aluminum hydroxide, barium yellow, cadmium red, chrome yellow, carbon black. Among these, carbon black is particularly preferred.
Here, examples of carbon black include those produced according to any of known methods such as a contact method, a furnace method and a thermal method.
One kind of the aforementioned pigments may be used singly, or two ore more kinds of the pigments selected from within the group or among the two or more groups may be used in combination.
The content of the colorant(s) (particularly, pigment) in the ink composition is preferably from 1 to 25% by mass, and more preferably from 5 to 20% by mass, relative to the total mass of the ink composition (including the colorant, resin particles, water-soluble organic solvent and water), from the viewpoint of color density, granularity, ink stability and ejection reliability.

Water-Insoluble Polymer Dispersant

The water-insoluble polymer dispersant (hereinafter sometimes simply referred to as a "dispersant") in the invention is not particularly limited insofar as it is a water-insoluble polymer and can disperse pigments, and known water-insoluble polymer dispersants can be used. The water-insoluble polymer dispersant may include both a hydrophobic constituent unit and a hydrophilic constituent unit, for example.
Examples of a monomer used for the hydrophobic constituent unit include a styrene monomer, alkyl(meth) acrylate, and an aromatic group-containing (meth)acrylate.

The monomers used for the hydrophilic constituent unit is not particularly limited insofar as they contain a hydrophilic group. Examples of the hydrophilic group include a nonionic group, a carboxyl group, a sulfonic acid group, and a phosphonic acid group. The nonionic group has the same meaning as the nonionic group in the self-dispersing polymer previously described above.
The hydrophilic constituent unit in the invention preferably contains at least a carboxyl group from the viewpoint of dispersion stability. The hydrophilic constituent unit may preferably contain both a nonionic group and a carboxyl group.
Specific examples of the water-insoluble polymer dispersant in the invention include a styrene-(meth)acrylic acid copolymer, a styrene-(meth)acrylic acid-(meth)acrylic acid ester copolymer, a (meth)acrylic acid ester-(meth)acrylic acid copolymer, a polyethylene glycol(meth)acrylate-(meth)acrylic acid copolymer, and a styrene-maleic acid copolymer. Here, the "(meth)acrylic acid" refers to acrylic acid or methacrylic acid.
In the invention, the water-insoluble polymer dispersant is preferably a vinyl polymer containing a carboxyl group from the viewpoint of dispersion stability of pigments, and more preferably a vinyl polymer at least containing a constituent unit derived from an aromatic group-containing monomer as a hydrophobic constituent unit and a constituent unit containing a carboxyl group as a hydrophilic constituent unit.
The weight average molecular weight of the water-insoluble polymer dispersant is preferably from 3,000 to 200,000, more preferably from 5,000 to 100,000, still more preferably from 5,000 to 80,000, and particularly preferably from 10,000 to 60,000 from the viewpoint of dispersion stability of pigments.
The content of the dispersant in a coloring material in the invention is preferably from 10 to 100% by mass, more preferably from 20 to 70% by mass, and particularly preferably from 30 to 50% by mass relative to the pigment from the viewpoint of dispersibility of pigments, ink coloring properties, and dispersion stability.
When the content of the dispersant in the coloring material is in the range described above, the pigment may tend to be covered with a suitable amount of dispersant and coloring particles having a small particle diameter and excellent stability over time may tend to be easily obtained.
The coloring material in the invention may further contain additional dispersant(s) in addition to the water-insoluble polymer dispersant. Examples of the additional dispersant that may be used include known water-soluble low-molecular dispersants, and water-soluble polymers. The content of the additional dispersants other than the water-insoluble polymer dispersant may be, for example, in the above-described range of the content of the dispersant.

Surfactant

The ink composition according to the invention may contain a surfactant, if necessary. The surfactant may be used as a surface tension adjusting agent.
As the surface tension adjusting agent, a compound having a structure in which a hydrophilic moiety and a hydrophobic moiety are contained in the molecule may be effectively used, and any of anionic surfactants, cationic surfactants, amphoteric surfactants, nonionic surfactants, and betaine surfactants may be used. Further, the dispersants (polymeric dispersant) as described above may be used as surfactants.
In the present invention, from the viewpoint of suppressing ink droplet interference, a nonionic surfactant may be preferably used, and among the nonionic surfactants, an acetylene glycol derivative is more preferable.
When the ink composition contains a surfactant (surface tension adjusting agent), it is preferable that the surfactant be contained in such an amount that the surface tension of the ink composition may be adjusted to be within a range of from 20 to 60 mN/m, in view of performing the ejection of the ink composition satisfactorily by an ink-jet method, and more preferably the surfactant is contained in such an amount such that the surface tension of the ink composition may be adjusted to be within a range of from 20 to 45 mN/m, and even more preferably within a range of from 25 to 40 mN/m.
The specific amount of the surfactant in the ink composition is not particularly limited, and may be an amount by which a surface tension may be in the preferable range.
The amount of the surfactant(s) is preferably 1% by mass or more, more preferably from 1 % by mass to 10% by mass, and even more preferably from 1 % by mass to 3% by mass.

Other Components

The ink composition may further contain various additives as other components according to necessity, in addition to the components described above.
Examples of the various additives include those known additives such as an ultraviolet absorbent, a fading preventing agent, an anti-mold agent, a pH adjusting agent, an anti-rust agent, an antioxidant, an emulsion stabilizer, a preservative, an antifoaming agent, a viscosity adjusting agent, a dispersion stabilizer, a chelating agent, and a solid-wetting agent.
Examples of the ultraviolet absorbent include benzophenone-based ultraviolet absorbents, benzotriazole-based ultraviolet absorbents, salicylate-based ultraviolet absorbents, cyanoacrylate-based ultraviolet absorbents, and nickel

complex salt-based ultraviolet absorbents.

As the fading preventing agent, any of various organic fading preventing agents and metal complex-based fading preventing agents may be used. Examples of the organic fading preventing agent include hydroquinones, alkoxyphenols, dialkoxyphenols, phenols, anilines, amines, indanes, chromans, alkoxyanilines, and heterocycles. Examples of the metal complex include nickel complexes, and zinc complexes.

Examples of the anti-mold agent include sodium dehydroacetate, sodium benzoate, sodium pyridinethione-1-oxide, p-hydroxybenzoic acid ethyl ester, 1,2-benzisothiazolin-3-one, sodium sorbate, sodium pentachlorophenol.
The content of the anti-mold agent in the ink composition is preferably in the range of from 0.02% by mass to 1.00% by mass.

The pH adjusting agent is not particularly limited as long as the agent may adjust the pH to a desired value without exerting any adverse effects on the ink composition to be prepared, and may be appropriately selected according to the purpose. Examples thereof include alcohol amines (for example, diethanolamine, triethanolamine, 2-amino-2-ethyl-1,3-propanediol), alkali metal hydroxides (for example, lithium hydroxide, sodium hydroxide, potassium hydroxide), ammonium hydroxides (for examples, ammonium hydroxide, quaternary ammonium hydroxide), phosphonium hydroxide, alkali metal carbonates.

Examples of the anti-rust agent include acidic sulfurous acid salts, sodium thiosulfate, ammonium thiodiglycolate, diisopropylamnonium nitrite, pentaerythritol tetranitrate, dicyclohexylammonium nitrite.

Examples of the antioxidant include phenol-based antioxidants (including hindered phenol-based antioxidants), amine-based antioxidants, sulfur-based antioxidants, phosphorus-based antioxidants.

Examples of the chelating agent include sodium ethylenediaminetetraacetate, sodium nitrilotriacetate, sodium hydroxyethylethylenediaminetriacetate, sodium diethylenetriaminepentaacetate, sodium uramyldiacetate.

Examples of the solid-wetting agent include sugars such as glucose, mannose, fructose, ribose, xylose, arabinose, galactose, aldonic acid, glucitol, maltose, cellobiose, lactose, sucrose, trehalose, and maltotriose; sugar alcohols; hyaluronic acids; and ureas.

- Properties of Ink Composition -

The surface tension (25°C) of the ink composition according to the invention is preferably from 20 mN/m to 60 mN/m. More preferably, the surface tension is from 20 mN/m to 45 mN/m, and even more preferably from 25 mN/m to 40 mN/m.
The surface tension of the ink composition is measured under the conditions of a temperature of 25°C using an automatic surface tensiometer (model name: CBVP-Z, manufactured by Kyowa Interface Science Co., Ltd.).

The viscosity at 25°C of the ink composition according to the invention is preferably from 1.2 mPa·s to 15.0 mPa·s, more preferably from 2 mPa·s to less than 13 mPa·s, and even more preferably from 2.5 mPa·s to less than 10 mPa·s.
The viscosity of the ink composition is measured under the conditions of a temperature of 25°C using a viscometer (model name: TV-22, manufactured by Toki Sangyo Co., Ltd.).

*<Ink Set>*

The ink set of the present invention includes at least one ink composition of the present invention. The ink set may include two or more ink compositions of the present invention. The ink set may include the ink composition and a treatment liquid that enables formation of an aggregate at the liquid composition when the treating liquid is in contact with the liquid composition.
According to the ink set of the present invention, since the ink composition of the present invention is included, the blocking resistance properties of formed images may be synergetically enhanced. Further, the ink set of the present invention may be used to form, for example, any of monochromatic images and multiple colored images.

*<Ink-Jet Image Forming Method>*

*Image Forming Step*

The ink-jet image forming method of the present invention includes supplying an ink composition of the present invention onto a recording medium by an ink-jet method to form an image (image forming step). The ink-jet image forming method may further include additional step(s) as necessary. According to the ink-jet image forming method of the present invention, images are formed using the ink composition and, therefore, the blocking resistance properties of the formed images may be enhanced.

Further, with respect to the image forming step, in view of the fact that the residual solvent in the formed images

obtained by ejecting the ink composition undergoes a great change, when the first solvent having a vapor pressure of 0.1Pa or higher at a temperature of 20°C is used as a part of or entire solvent used in the ink composition, the residual solvent in the image portion may be reduced.
Accordingly, alteration of paper surface such as surface roughening may be suppressed and damages to the final image surface may be suppressed. Fine lines, minute image portion and the like may also be finely and uniformly formed. Unevenness caused when ink is supplied to a large area such as solid recording may also be suppressed and, therefore, images having high density uniformity may be obtained. The blocking resistance, offset resistance, and scratch resistance (adherence to paper) of images may also be enhanced. Further, image recording at a high density may be enabled, and color reproducibility of images may be improved.

Recording Medium

In the ink-jet recording method of the invention, the recording medium is not particularly restricted. As a recording medium, for example, a coated paper, which is used in general offset printing or the like, may be used. The coated paper is a product obtained by applying a coating material on the surface of a high quality paper, a neutral paper or the like, which is mainly made of cellulose and is generally not surface-treated, to provide a coating layer.

In general, conventional image formation involving aqueous ink-jet ink using a coated paper as a recording medium may cause problems in the product quality, such as bleeding of image or scratch resistance, but in the ink-jet recording method of the invention, the image bleeding may be suppressed, and the generation of density unevenness may be prevented so that images with density uniformity can be formed, and images having favorable blocking resistance, offset resistance and scratch resistance may be recorded.

As the coated paper, those which are commercially available may be used. For example, a coated paper for general printing may be used, and specific examples thereof include coat papers (A2, B2) such as "OK TOPCOAT +" manufactured by Oji Paper Co., Ltd., "AURORACOAT" and "U-LITE" manufactured by Japan Paper Group, Inc.; and art paper (A1) such as "TOKUBISHI ART" manufactured by Mitsubishi Paper Mills, Ltd.

Ink-Jet Method

Image recording by utilizing the ink-jet method can be performed by supplying energy thereby ejecting an ink composition to a coated paper on which a treatment liquid has been supplied. Accordingly a colored image may be formed. In the ink-jet recording method of the present invention, for example, a method described in paragraphs 0093 to 0105 in JP-A No. 2003-306623 may be used as a preferable method.

The ink-jet method is not particularly limited and may be of any known system, for example, a charge control system of ejecting an ink by utilizing an electrostatic attraction force, a drop on demand system of utilizing a vibration pressure of a piezo element (pressure pulse system), an acoustic ink-jet system of converting electric signals into acoustic beams, irradiating them to an ink, and ejecting the ink by utilizing a radiation pressure, and a thermal ink-jet system of heating an ink to form bubbles and utilizing the resultant pressure. As the ink-jet method, an ink-jet method described in JP-A No. 54-59936 of causing abrupt volume change to an ink that undergoes the effect of thermal energy, and ejecting the ink from a nozzle by an operation force due to the change of state can be utilized effectively.
Examples of the ink-jet method include a system of injecting a number of ink droplets of low concentration, a so-called "photo-ink" each in a small volume, a system of improving an image quality by using plural kinds of inks of a substantially identical hue and of different densities, and a system of using a colorless transparent ink.

*Treatment Liquid Supplying Step*

The ink-jet image forming method of the present invention preferably further includes supplying a treatment liquid with which an aggregate can be formed when the treatment liquid is in contact with the ink composition (treatment liquid supplying step), from the viewpoints of blocking resistance, scratch resistance and offset resistance of the images. In the treatment liquid supplying step, the treatment liquid containing an aggregating agent for aggregating (may also be referred to as "fixing") the components in the ink composition is supplied. When the ink-jet recording using the ink composition is performed in the presence of the treatment liquid, the occurrence of curling and cockling of the medium after recording may be suppressed, ink cissing may also be suppressed, and images having favorable blocking resistance, offset resistance and scratch resistance may be recorded.

The treatment liquid used in the present invention includes at least one aggregating agent. Any compound may be used as the aggregating agent without particular limitation, as long as an aggregate can be formed when the aggregating agent comes into contact with the ink composition, and the aggregating agent may be appropriately selected from the known compounds.

Examples of the aggregating agent include compounds capable of changing the pH of the ink composition,

polyvalent metal salts, and cationic compounds. In the invention, compounds capable of changing the pH of the ink composition are preferable from the viewpoint of aggregation properties of the ink composition, and compounds capable of reducing the pH of the ink composition are more preferable.

Examples of the compounds capable of reducing the pH of the ink composition include acidic substances. Examples of the acidic substances include sulfuric acid, hydrochloric acid, nitric acid, phosphoric acid, polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, metaphosphoric acid, pyrrolidone carboxylic acid, pyrone carboxylic acid, pyrrole carboxylic acid, furancarboxylic acid, pyridinecarboxylic acid, coumarinic acid, thiophene carboxylic acid, nicotinic acid, derivatives of the compounds, and salts thereof.

In particular, acidic substances having high water-solubility are preferable. From the viewpoint of fixing the whole ink upon reacting with the ink composition, acidic substances having three or lower valences are preferable and acidic substances having two to three valences are more preferable.

One kind of the acidic substances may be used singly or two or more kinds of the acidic substances may be used in combination.

When the treatment liquid in the invention contains the acidic substances, the pH (25°C) of the treatment liquid is preferably from 0.1 to 6.0, more preferably from 0.5 to 5.0, and still more preferably from 0.8 to 4.0.

Examples of the polyvalent metal salt include salts of any of alkaline earth metals belonging to Group II of the periodic table (e.g., magnesium and calcium), transition metals belonging to Group III of the periodic table (e.g., lanthanum), cations from Group XIII of the periodic table (e.g., aluminum), and lanthanides (e.g., neodymium). As salts of the metals, carboxylic acid salt (formate, acetate, benzoate, etc.), nitrate, chlorides, and thiocyanate are preferable. In particular, calcium salts or magnesium salts of carboxylic acids (e.g., formate, acetate, and benzoate), calcium salts or magnesium salts of nitric acid, calcium chloride, magnesium chloride, and calcium salts or magnesium salts of thiocyanic acid are preferable.

The cationic compound may be, for example, preferably a cationic surfactant. Preferred examples of the cationic surfactant include compounds of primary, secondary or tertiary amine salt type. Examples of these amine salt type compounds include compounds such as hydrochlorides or acetates (for example, laurylamine, palmitylamine, stearylamine, rosin amine), quaternary ammonium salt type compounds (for example, lauryltrimethylammonium chloride, cetyltrimethylammonium chloride, lauryldimethylbenzylammonium chloride, benzyltributylammonium chloride, benzalkonium chloride), pyridinium salt type compounds (for example, cetylpyridinium chloride, cetylpyridinium bromide), imidazoline type cationic compounds (for example, 2-heptadecenylhydroxyethylimidazoline), and ethylene oxide adducts of higher alkylamines (for example, dihydroxyethylstearylamine). A polyallylamine compound may be used. Further, amphoteric surfactants exhibiting cationic properties in a desired pH region may also be used, examples of which include amino acid type amphoteric surfactants, $R\text{-}NH\text{-}CH_2CH_2\text{-}COOH$ type compounds wherein R represents an alkyl group or the like, carboxylic acid salt type amphoteric surfactants (for example, stearyldimethylbetaine, lauryldihydroxyethylbetaine), amphoteric surfactants of sulfuric acid ester type, sulfonic acid type or phosphoric acid ester type.

One kind of aggregating agent may be used singly or two or more kinds of aggregating agents may be used in combination.

The content of the aggregating agent(s) for aggregating the ink composition in the treatment liquid is preferably from 1 to 50 % by mass, more preferably from 3 to 45 % by mass, and even more preferably from 5 to 40 % by mass.

When at least one of an acidic substance and a cationic compound is used in combination with the polyvalent metal compound, the content of the acidic substance and the cationic compound in the treatment liquid (total content of the acidic substance and the cationic compound) is preferably from 5% by mass to 95% by mass, and more preferably from 20% by mass to 80% by mass, relative to the total content of the polyvalent metal compound.

Other Components

The treatment liquid according to the present invention may contain, in general, a water-soluble organic solvent in addition to the aggregating agent, and may also contain various other additives. Details of the water-soluble organic solvent and the various other additives are similar to those for the ink composition.

The surface tension (25°C) of the treatment liquid is preferably 20 mN/m or more and 60 mN/m or less. More preferably, the surface tension is 25 mN/m or more and 50 mN/m or less, and is even more preferably 25 mN/m or more and 45 mN/m or less.

The surface tension of the treatment liquid is measured under the conditions of a temperature of 25°C using an automatic surface tension meter (model name: CBVP-Z, manufactured by Kyowa Interface Science Co., Ltd.).

In regard to the supplying of the treatment liquid on coated paper, known liquid supplying methods may be used without any particular limitation, and any method may be selected. Examples of the method include spray coating, coating with a coating roller, supplying by an ink-jet method, and dipping.

Specific examples of a liquid supplying method include size press methods represented by a horizontal size

press method, a roll coater method, a calender size press method or the like; size press methods represented by an air knife coater method or the like; knife coater methods represented by an air knife coater method; roll coater methods represented by a transfer roll coater method such as a gate roll coater method, a direct roll coater method, a reverse roll coater method, a squeeze roll coater method or the like; blade coater methods represented by a billblade coater method, a short dwell coater method, a two stream coater method; bar coater methods represented by a rod bar coater method; bar coater methods represented by a rod bar coater method; cast coater methods; gravure coater method; curtain coater methods; die coater methods; brush coater methods; and transfer methods.

Furthermore, a method of coating in which the coating amount is controlled using a coating apparatus equipped with a liquid amount controlling member, as in the case of the coating apparatus described in JP-A No. 10-230201, may be used.

The treatment liquid may be supplied over the entire surface of the recording medium (coated paper). Alternatively, the treatment liquid may be supplied to a region where ink-jet recording is performed in the subsequent image recording step. According to the invention, in view of uniformly adjusting the amount of supplying of the treatment liquid, uniformly recording fine lines, fine image portions or the like, and suppressing image unevenness such as density unevenness, it is preferable that the treatment liquid is supplied over the entire surface of the coated paper by coating the liquid using a coating roller or the like.

As for the method of coating the treatment liquid while controlling the amount of supply of the aggregating agent to the above-described range, for example, a method of using an anilox roller may be suitably mentioned. The anilox roller is a roller in which the roller surface, being thermal spray coated with ceramics, is processed with laser and provided with a pattern of a pyramidal shape, a slant-lined shape, a hexagonal shape or the like on the surface. The treatment liquid goes into the depression areas provided on this roller surface, and when the roller surface contacts the paper surface, transfer occurs, and the treatment liquid is coated in an amount that is controlled at the depressions of the anilox roller.

- Treatment Step -

In this invention, after supplying the treatment liquid to the recording medium (preferably, coated paper) as described above, it is preferable to cany out at least one treatment selected from the group consisting of a drying treatment and a penetration treatment (treatment step). The treatment step may involve carrying out only any one of a drying treatment and a penetration treatment, or may involve carrying out both a drying treatment and a penetration treatment.

As for the drying treatment, there may be mentioned a treatment of drying and removing (removing by drying) the solvent contained in the treatment liquid, after supplying of the treatment liquid. When the solvent in the treatment liquid is removed by drying after the treatment liquid has been supplied onto the recording medium, the occurrence of curling, cockling or ink cissing may be suppressed more effectively, the blocking resistance, offset resistance and scratch resistance of the recorded images may be further enhanced, and the recording of images may be performed more favorably.

The drying treatment is not particularly limited, as long as at least a part of the solvent (for example, water or a water-soluble organic solvent) contained in the treatment liquid may be removed. The removal by drying may be carried out by, for example, a method drying by heating, air blowing (blowing dry air, or the like).

As for the penetration treatment, there may be mentioned a method of allowing the recording medium (preferably, coated paper) to which the treatment liquid has been supplied to stand for a predetermined time, thereby allowing the treatment liquid to penetrate into the recording medium (preferably, coated paper) by natural penetration due to, for example, the capillary phenomenon; a method of suctioning the treatment liquid under reduced pressure from the surface opposite to the treatment liquid-supplied surface, of the recording medium (preferably, coated paper); a method of creating a difference in the vapor pressure on the surface opposite to the surface of the recording medium (preferably, coated paper); and the like.

The time for allowing the recording medium to which the treatment liquid has been supplied to stand, may depend on the amount of the treatment liquid supplied or the area of the treatment liquid-supplied surface of the recording medium, but the time is usually from 0.01 seconds to 1 second with respect to 1 $m^2$ of the area of the treatment liquid-supplied surface.

In the ink-jet recording method of the invention, any of the treatment liquid supply process and the image recording process may be performed earlier. From the viewpoint of forming fine lines, minute image portions and the like further finely and uniformly, or alternatively, when supplying the ink to a large are, such as solid recording, suppressing occurrence of unevenness as much as possible and enhancing the density uniformity, thereby further increasing image quality, blocking resistance, offset resistance, and scratch resistance, it is preferable that the image recording step is carried out after the treatment liquid supply step (preferably after applying the treatment liquid onto paper (preferably entire surface of paper)) is preferable.

*Fixing Step*

It is preferable that the ink-jet recording method of the invention further include fixing the image formed in the image forming step onto a recording medium (a fixing step). The fixing step is preferably a heating-and-pressing fixing step of fusion fixing resin particles contained in the ink composition. The heating-and-pressing fixing step is not particularly limited insofar as the resin particles contained in the ink composition can be fusion fixed, and can be suitably selected according to the purpose.
For example, a heating-and-pressing fixing process described in JP-A No. 2004-174981 can also be applied in the invention.
The ink-jet image forming method of the invention preferably includes (i) supplying, onto a recording medium, the treatment liquid that enables formation of an aggregate at the liquid composition when the treatment liquid is in contact with the liquid composition (treatment liquid supply step), (ii) forming an image by supplying the ink composition by an ink-jet method onto the recording medium to which the treatment liquid has been supplied (image forming step), and (iii) fixing the formed image (fixing step), from the viewpoint of the blocking resistance, scratch resistance, and offset resistance of images to be formed.
The ink-jet recording method of the invention may further include other steps, such as an ink drying step of drying and removing an organic solvent in the ink composition supplied to coated paper.

EXAMPLES

Hereinafter, the invention will be specifically described with reference to Examples, but is not limited to the following Examples insofar as the gist thereof is not exceeded. Unless otherwise specified, "part" is based on mass.

Synthesis of Polymer Dispersant P-1

To a 1000 ml three necked flask having a stirrer an a condenser tube, 88 g of methyl ethyl ketone was added, and heated to 72°C under a nitrogen atmosphere. In the flask, a solution in which 0.85 g of dimethyl-2,2'-azobisisobutyrate, 60 g of benzyl methacrylate, 10 g of methacrylic acid, and 30 g of methyl methacrylate were dissolved in 50 g of methyl ethyl ketone was added dropwise over 3 hours. After the completion of the dropwise addition, the content in the flask was further allowed for reaction for one hour. Then, a solution in which 0.42 g of dimethyl-2,2'-azobisisobutyrate was dissolved in 2 g of methyl ethyl ketone was added, the temperature of the mixture was increased to 78°C, and the mixture was heated for 4 hours. The obtained reaction solution precipitated twice in a large excess amount of hexane, and the precipitated resin was dried, thereby obtaining 96 g of polymer dispersant P-1.
The composition of the obtained resin was confirmed by $^1$H-NMR, and the weight average molecular weight (Mw) determined by GPC was 44,600. Furthermore, the acid value determined by the method described in JIS Standard (JISK0070:1992, the disclosure of which is incorporated by reference herein) was 65.2 mgKOH/g.
Preparation of Resin-Coated Pigment Dispersion

-Resin-coated cyan pigment dispersion -

10 parts of pigment blue 15: (phthalocyanine blue A220, manufactured by Dainichiseika Color & Chemicals Mfg. Co., Ltd), 5 parts of polymer dispersant P-1, 42 parts of methyl ethyl ketone, 5.5 parts of 1 mol/L aqueous NaOH solution, and 87.2 parts of ion exchange water were mixed, and dispersed for 2 to 6 hours in a bead mill using 0.1 mmϕ zirconia beads.
From the obtained dispersion, methyl ethyl ketone was removed at 55°C under reduced pressure, and further water was partially removed, thereby obtaining a resin-coated cyan pigment (encapsulated pigment) dispersion having a pigment concentration of 10.2% by mass.

-Resin-coated magenta pigment dispersion-

A resin-coated magenta pigment dispersion was obtained in the same manner as above, except that instead of phthalocyanine blue A220, CHROMOPHTHAL JET Magenta DMQ (pigment red 122, manufactured by Ciba Specialty Chemicals) was used as a pigment in the preparation of the resin-coated cyan pigment dispersion.

-Resin-coated yellow pigment dispersion-

A resin-coated yellow pigment dispersion was obtained in the same manner as above, except that instead of phthalocyanine blue A220, IRGALITE Yellow GS (pigment yellow 74, manufactured by Ciba Specialty Chemicals) was

used as a pigment in the preparation of the resin-coated cyan pigment dispersion.

Preparation of Self-Dispersing Polymer Particles

-Synthesis of self-dispersing polymer particles B-20-

In a 2 L three necked flask having a stirrer, a thermometer, a reflux condenser tube, and a nitrogen gas introducing pipe, 540.0 g of methyl ethyl ketone was charged, and the temperature was increased to 75°C. A mixed solution containing 108 g of methyl methacrylate, 388.8 g of isobornyl methacrylate, 43.2 g of methacrylic acid, 108 g of methyl ethyl ketone, and 2.16 g of "V-601" (manufactured by Wako Pure Chemical Ind. Ltd.) was added dropwise at a constant rate while maintaining the temperature in the reactor at 75°C so that the dropwise addition completed in 2 hours. After the completion of the dropwise addition, a solution containing 1.08 g of "V-601 and 15.0 g of methyl ethyl ketone was added, and the mixture was stirred at 75°C for 2 hours. Thereafter, a solution containing 0.54 g of "V-601" and 15.0 g of methyl ethyl ketone was further added, and the mixture was stirred 75°C for 2 hours. Then, the temperature was increased to 85°C, and the mixture was further stirred for 2 hours.
The weight average molecular weight (Mw) of the obtained copolymer was 61000 (calculated in terms of polystyrene, by gel permeation chromatography (GPC), using, as a column, TSKgel SuperHZM-H, TSKgel SuperHZ4000, and TSKgel SuperHZ200 (manufactured by Tosoh Corporation)) and the acid value thereof was 52.1 (mgKOH/g).
The glass transition temperature was measured under usual measurement conditions using a differential scanning calorimeter (DSC) EXSTAR6220 (trade name) manufactured by SII Nanotechnology Inc., and the measured Tg was 180°C. The monomer composition (based on mass) of B-20 is methyl methacrylate/Isobornyl methacrylate/Methacrylic acid (20/72/8).
Next, 588.2 g of a polymerization solution was weighed, 165 g of isopropanol and 120.8 ml of 1 mol/L aqueous NaOH solution were added, and the temperature in the reactor was increased to 80°C. Next, 718 g of distilled water was added dropwise at a rate of 20 ml/min for water dispersing. Thereafter, the temperature in the reactor was maintained at 80°C for 2 hours, then at 85°C for 2 hours, and then at 90°C for 2 hours under atmospheric pressure, and then the solvent was distilled off. Furthermore, the pressure in the reactor was reduced, and isopropanol, methyl ethyl ketone, and distilled water were distilled off, thereby obtaining an aqueous dispersion of the self-dispersing polymer B-20 (resin particles) having a solid content concentration of 26.0%.
Aqueous dispersions of self-dispersing polymers (resin particles) having the following monomer compositions were prepared in the same manner as above, except that the type and addition amount of monomers were changed, respectively, in such a manner as to achieve the following monomer compositions, in the preparation of the aqueous dispersion of the self-dispersing polymer B-20.

-Monomer composition of resin particles (based on mass)-

B-22: Methyl methacrylate/Isobornyl methacrylate/Methacrylic acid (40/52/8): Measured Tg of 160°C
B-25: Methyl methacrylate/Dicyclopentanil methacrylate/Methacrylic acid (40/50/10): Measured Tg of 130°C
B-28: Methyl methacrylate/Dicyclopentanil methacrylate/Methoxypolyethylene glycol methacrylate (n = 2)/Methacrylic acid (54/35/5/6): Measured Tg of 100°C
B-13: Styrene/Phenoxy ethyl methacrylate/Butyl acrylate/Acrylic acid (50/5/20/25): Measured Tg of 50°C
B-11: Phenoxy ethyl acrylate/Methyl methacrylate/Butyl acrylate/Methacrylic acid (16/46/30/8): Measured Tg of 20°C

<Example 1>

Preparation of Ink Set 1

Each of a cyan pigment ink, a magenta pigment ink, a yellow pigment ink, and a black pigment ink was prepared as follows, and ink set 1 including these ink compositions was prepared.

Preparation of Cyan Pigment Ink (C-1)

Using the resin-coated cyan pigment dispersions and the aqueous dispersion of self-dispersing polymer B-20, a volatile solvent, a surfactant, and ion exchange water were mixed in such a manner as to give the following composition, and then the mixture was filtered with a 5 μm membrane filter, thereby preparing cyan ink.

-Composition of cyan ink C-1-

· Cyan pigment (pigment blue 15:3) ···4%
· Polymer dispersant P-1 (solid content) ···2%
· Self-dispersing polymer particles B-20 (solid content) ···6% (resin particles)
· TPGmME ···16%
(First solvent, Vapor pressure (20°C) of 2.7 Pa)
· OLFINE E1010 ···1%
(manufactured by Nissin Chemical Industry; surfactant)
· Ion exchange water ···Added to give a total amount of 100%

The pH (25°C) of cyan pigment ink C-1 was measured using a pH meter WM-50EG (trade name, manufactured by TOA ELECTRIC INDUSTRIAL CO., LTD.), and then the pH value was 8.5.

Preparation of Magenta Pigment Ink (M-1)

Magenta pigment ink (M-1) was prepared in the same manner as above, except that instead of the resin-coated cyan pigment dispersion, the resin-coated magenta pigment dispersion was used in the preparation of cyan pigment ink (C-1). The pH value was 8.5.

Preparation of Yellow Pigment Ink (Y-1)

Yellow pigment ink (Y-1) was prepared in the same manner as above, except that instead of the resin-coated cyan pigment dispersion, the resin-coated yellow pigment dispersion was used in the preparation of cyan pigment ink (C-1). The pH value was 8.5.

Preparation of Black Pigment Ink (K-1)

Black pigment ink (K-1) was prepared in the same manner as above, except instead of the resin-coated cyan pigment dispersion, a pigment dispersion CAB-O-JETTM200 (trade name, manufactured by CABOT, Carbon black dispersion) was used in the preparation of cyan pigment ink (C-1).

<Examples 2 to 38>

Each of ink compositions C-2 to C-38, ink compositions M-2 to M-38, ink compositions Y-2 to Y-38, and ink compositions K-2 to K-38 was prepared in the same manner as in Example 1, except that the type of resin particles, the type and addition amount of the first solvent, and the type and addition amount of the second solvent were changed as illustrated in Table 1 and, according to these changes, the addition amount of ion exchange water was also changed, and each of ink sets containing the corresponding ink compositions was prepared.

<Comparative Examples 1 to 9>

Each of ink compositions C-1c to C-9c, ink compositions M-1c to M-9c, ink compositions Y-1c to Y-9c, and ink compositions K-1c to K-9c was prepared in the same manner as in Example 1, except that the type of resin particles, the type and addition amount of the first solvent, and the type and addition amount of the second solvent were changed as illustrated in Table 1 and, according to these changes, the addition amount of ion exchange water was also changed, and each of ink sets containing the corresponding ink compositions was prepared.

<Evaluation>

Preparation of Treatment Liquid 1

The following materials were mixed, thereby producing a treatment liquid 1. The pH (25°C) of the treatment liquid 1 measured by a pH meter WM-50EG (trade name) manufactured by TOA ELECTRIC INDUSTRIAL CO., LTD. was 1.21.

· Malonic acid (aggregating agent): 7.5 g
· Diethylene glycol monoethyl ether: 10 g
(Hereinafter abbreviated as "DEGmEE")
· Ion exchange water: 7.5 g

*Image Formation*

TOKUBISHI ART (basis weight 104.7 g/$m^2$) was prepared as the recording medium (coated paper), and images were recorded as will be described below. The obtained images were evaluated as described below. The results are shown in Table 1.
Further, as recording media, OK TOPCOAT + (basis weight 104.7 g/$m^2$) and U-LITE (bases weight 104.7 g/$m^2$) each were prepared, and images were recorded as will be described below. The obtained images were evaluated as described below. The results are shown in Tables 2 and 3.

Ink-jet method

Recording of line images and solid images by four color single pass recording were performed, using the cyan pigment ink, the magenta pigment ink, the yellow pigment ink, and the black pigment ink obtained as described above as the ink compositions, together with treatment liquid 1. In this case, with respect to the line images, a line of 1-dot width, a line of 2-dot width and a line of 4-dot width, at 1200 dpi, were recorded by ejecting the ink composition by the single pass mode in the main scanning direction. The solid image was recorded by ejecting the ink composition over the entire surface of a sample of a recording medium cut to A5 size. Here, the conditions for the process of recording are as follows.

(1) Treatment liquid supplying step

Treatment liquid 1 was coated over the entire surface of the recording medium by means of a roll coater and the amount of application was controlled by an anilox roller (number of lines 100 to 300/inch), such that the amount of supply was 0.6g/$m^2$.

(2) Treatment step

Subsequently, the recording medium on which the treatment liquid had been applied was subjected to a drying treatment and a penetration treatment under the conditions described below.

Air speed: 10 m/s
Temperature: The recording medium was heated with a contact type plate heater from the opposite side of the recorded surface (rear side) of the recording medium such that the surface temperature on the recorded surface side of the recording medium became 60°C.

(3) Image recording step

Thereafter, a line image and a solid image were recorded on the coated surface of the recording media to which the treatment liquid had been applied, by ejecting the ink composition by an ink-jet method under the conditions described below.

Head: Piezo full line heads of 1,200 dpi/20 inch width were arranged for 4 colors.
Amount of ejected droplet: 2.0 pL.
Operating frequency: 30 kHz

(4) Ink drying step

Subsequently, the recording medium to which the ink composition had been supplied was dried under the conditions described below.

Drying method: air blown drying
Air speed: 15 m/s
Temperature: The recording medium was heated with a contact type plate heater from the opposite side of the

recorded surface (rear side) of the recording medium such that the surface temperature on the recorded surface side of the recording medium became 60°C.

(5) Fixing step

Subsequently, a heating and fixing treatment was carried out by passing the recording medium between a pair of rollers under the conditions described below.

Silicone rubber roller (hardness 50°, nip width 5 mm)
Roller temperature: 70°C
Pressure: 0.2 MPa

*Evaluation*

The following evaluation was performed on the line images and solid images recorded as described above.

- Blocking Resistance -

Immediately after printing a solid image of 2 cm square on a recording medium, an unrecorded recording medium (the same recording medium as that used for recording (hereinafter, referred to as an unused sample in regard to the current evaluation)) was placed on the recording medium having the solid image of 2cm square thereon, and was left for 24 hours under conditions of a temperature of 60°C and a humidity of 30% RH with a load of 150 kg/$m^2$. The degree of transfer of ink to the blank area of the unused sample was visually observed, and was evaluated according to the following evaluation criteria.

(Evaluation criteria)

A: There is no transfer of ink at all.
B: Transfer of ink is hardly noticeable.
C: Some level of transfer of ink is observed. Minimum tolerable level for practical application.
D: Transfer of ink is significant.

- Scratch Resistance -

Immediately after printing a solid image of 2 cm square on a recording medium, an unrecorded recording medium (the same recording medium as that used for recording (hereinafter, referred to as an unused sample in regard to the current evaluation)) was placed on the recording medium having the solid image of 2cm square thereon, and was rubbed thereagainst reciprocatingly (back and forth) 10 times with a load of 150 kg/$m^2$. The degree of transfer of ink to the blank area of the unused sample was visually observed, and was evaluated according to the following evaluation criteria.

(Evaluation criteria)

A: There is no transfer of ink at all.
B: Transfer of ink is hardly noticeable.
C: Some level of Transfer of ink is observed.
D: Transfer of ink is significant.

- Offset Resistance -

A solid image of cyan pigment ink was recorded on a solid image of magenta pigment ink and the uniform image portion was visually observed. The density unevenness was evaluated according to the following evaluation criteria.

(Evaluation criteria)

A: No offset is observed.
B: A slight offset is observed partly. Practically nonproblematic level.
C: Offset occurs. Minimum tolerable level for practical application.
D: Occurrence of offset is significant. Very low level with respect to practical application.

- Image Quality -

Printing performance was evaluated according to the following evaluation criteria, with respect to the line of 1-dot width, the line of 2-dot width, and the line of 4-dot width recorded on the recording medium.

(Evaluation criteria)

A: All lines are uniform lines.
B: The line of 1-dot width is uniform, but non-uniformity in the line width or break in the line is observed in some parts of the line of 2-dot width and the line of 4-dot width.
C: The line of 1-dot width is uniform, but non-uniformity in the line width or break in the line is observed throughout the line of 2-dot width and the line of 4-dot width.
D: Significant non-uniformity in the line width or break in the line is observed throughout of the lines.

Table 1

| | Ink set | Resin particles | | First solvent | | Second solvent | | Recording medium | Blocking resistance | Scratch resistance | Offset resistance | Image quality |
|---|---|---|---|---|---|---|---|---|---|---|---|---|
| | | Type | Tg (°C) | Type | Content (%) | Type | Content (%) | | | | | |
| Ex. 1 | 1 | B-13 | 50 | TPGmME | 16 | - | - | Tokubishi art | C | A | B | B |
| Ex. 2 | 2 | B-13 | 50 | TPGmME | 8 | GP-250 | 8 | Tokubishi art | C | A | B | B |
| Ex. 3 | 3 | B-28 | 100 | TPGmME | 16 | - | - | Tokubishi art | B | A | B | B |
| Ex. 4 | 4 | B-28 | 100 | TPGmME | 8 | GP-250 | 8 | Tokubishi art | B | A | A | B |
| Ex. 5 | 5 | B-25 | 130 | TPGmME | 16 | - | - | Tokubishi art | B | A | B | B |
| Ex. 6 | 6 | B-25 | 130 | TPGmME | 8 | GP-250 | 8 | Tokubishi art | B | A | A | A |
| Ex. 7 | 7 | B-22 | 160 | TPGmME | 16 | - | - | Tokubishi art | A | A | B | B |
| Ex. 8 | 8 | B-22 | 160 | TPGmME | 10 | GP-250 | 6 | Tokubishi art | A | A | A | A |
| Ex. 9 | 9 | B-22 | 160 | TPGmME | 8 | GP-250 | 8 | Tokubishi art | A | A | A | A |
| Ex. 10 | 10 | B-22 | 160 | TPGmME | 6 | GP-250 | 10 | Tokubishi art | B | A | A | A |
| Ex. 11 | 11 | B-20 | 180 | TPGmME | 16 | - | - | Tokubishi art | A | A | B | B |
| Ex. 12 | 12 | B-20 | 180 | TPGmME | 10 | GP-250 | 6 | Tokubishi art | A | A | A | A |
| Ex. 13 | 13 | B-20 | 180 | TPGmME | 8 | GP-250 | 8 | Tokubishi art | A | A | A | A |
| Ex. 14 | 14 | B-20 | 180 | TPGmME | 6 | GP-250 | 10 | Tokubishi art | B | A | A | A |
| Ex. 15 | 15 | B-22 | 160 | DEGmEE | 16 | - | - | Tokubishi art | A | A | B | B |
| Ex. 16 | 16 | B-22 | 160 | DEGmEE | 10 | GP-250 | 6 | Tokubishi art | A | A | A | A |

(continued)

| | Ink set | Resin particles | | First solvent | | Second solvent | | Recording medium | Blocking resistance | Scratch resistance | Offset resistance | Image quality |
|---|---|---|---|---|---|---|---|---|---|---|---|---|
| | | Type | Tg (°C) | Type | Content (%) | Type | Content (%) | | | | | |
| Ex. 17 | 17 | B-22 | 160 | DEGmEE | 8 | GP-250 | 8 | Tokubishi art | A | A | A | A |
| Ex. 18 | 18 | B-22 | 160 | DEGmEE | 6 | GP-250 | 10 | Tokubishi art | B | A | A | A |
| Ex. 19 | 19 | B-20 | 180 | DEGmEE | 16 | - | - | Tokubishi art | A | A | B | B |
| Ex. 20 | 20 | B-20 | 180 | DEGmEE | 10 | GP-250 | 6 | Tokubishi art | A | A | A | A |
| Ex. 21 | 21 | B-20 | 180 | DEGmEE | 8 | GP-250 | 8 | Tokubishi art | A | A | A | A |
| Ex. 22 | 22 | B-20 | 180 | DEGmEE | 6 | GP-250 | 10 | Tokubishi art | B | A | A | A |
| Ex. 23 | 23 | B-22 | 160 | TEGmEE | 16 | - | - | Tokubishi art | A | A | B | B |
| Ex. 24 | 24 | B-22 | 160 | TEGmEE | 10 | GP-250 | 6 | Tokubishi art | A | A | A | A |
| Ex. 25 | 25 | B-22 | 160 | TEGmEE | 8 | GP-250 | 8 | Tokubishi art | A | A | A | A |
| Ex. 26 | 26 | B-22 | 160 | TEGmEE | 6 | GP-250 | 10 | Tokubishi art | B | A | A | A |
| Ex. 27 | 27 | B-20 | 180 | TEGmEE | 16 | - | - | Tokubishi art | A | A | B | B |
| Ex. 28 | 28 | B-20 | 180 | TEGmEE | 10 | GP-250 | 6 | Tokubishi art | A | A | A | A |
| Ex. 29 | 29 | B-20 | 180 | TEGmEE | 8 | GP-250 | 8 | Tokubishi art | A | A | A | A |
| Ex. 30 | 30 | B-20 | 180 | TEGmEE | 6 | GP-250 | 10 | Tokubishi art | B | A | A | A |
| Ex. 31 | 31 | B-22 | 160 | DPG | 16 | - | - | Tokubishi art | A | A | B | B |

(continued)

| | Ink set | Resin particles | | First solvent | | Second solvent | | Recording medium | Blocking resistance | Scratch resistance | Offset resistance | Image quality |
|---|---|---|---|---|---|---|---|---|---|---|---|---|
| | | Type | Tg (°C) | Type | Content (%) | Type | Content (%) | | | | | |
| Ex. 32 | 32 | B-22 | 160 | DPG | 10 | GP-250 | 6 | Tokubishi art | A | A | A | A |
| Ex. 33 | 33 | B-22 | 160 | DPG | 8 | GP-250 | 8 | Tokubishi art | A | A | A | A |
| Ex. 34 | 34 | B-22 | 160 | DPG | 6 | GP-250 | 10 | Tokubishi art | B | A | A | A |
| Ex. 35 | 35 | B-20 | 180 | DPG | 16 | - | - | Tokubishi art | A | A | B | B |
| Ex. 36 | 36 | B-20 | 180 | DPG | 10 | GP-250 | 6 | Tokubishi art | A | A | A | A |
| Ex. 37 | 37 | B-20 | 180 | DPG | 8 | GP-250 | 8 | Tokubishi art | A | A | A | A |
| Ex. 38 | 38 | B-20 | 180 | DPG | 6 | GP-250 | 10 | Tokubishi art | B | A | A | A |
| Comp. Ex. 1 | 1c | B-11 | 20 | TPGmME | 16 | - | - | Tokubishi art | D | B | D | D |
| Comp. Ex. 2 | 2c | B-11 | 20 | TPGmME | 10 | GP-250 | 6 | Tokubishi art | D | C | D | D |
| Comp. Ex. 3 | 3c | B-11 | 20 | TPGmME | 8 | GP-250 | 8 | Tokubishi art | D | D | C | D |
| Comp. Ex. 4 | 4c | B-11 | 20 | TPGmME | 6 | GP-250 | 10 | Tokubishi art | D | D | C | D |
| Comp. Ex. 5 | 5c | B-13 | 50 | - | - | GP-250 | 16 | Tokubishi art | D | B | D | C |
| Comp. Ex. 6 | 6c | B-28 | 100 | - | - | GP-250 | 16 | Tokubishi art | C | C | D | C |
| Comp. Ex. 7 | 7c | B-25 | 130 | - | - | GP-250 | 16 | Tokubishi art | C | D | C | C |

(continued)

| | Ink set | Resin particles | | First solvent | | Second solvent | | Recording medium | Blocking resistance | Scratch resistance | Offset resistance | Image quality |
|---|---|---|---|---|---|---|---|---|---|---|---|---|
| | | Type | Tg (°C) | Type | Content (%) | Type | Content (%) | | | | | |
| Comp. Ex. 8 | 8c | B-22 | 160 | - | - | GP-250 | 16 | Tokubishi art | B | D | C | C |
| Comp. Ex. 9 | 9c | B-20 | 180 | - | - | GP-250 | 16 | Tokubishi art | B | D | C | C |

Table 2

| Ink set | Resin particles | | First solvent | | Second solvent | | Recording medium | Blocking resistance | Scratch resistance | Offset resistance | Image quality | Remarks |
|---|---|---|---|---|---|---|---|---|---|---|---|---|
| | Type | Tg (°C) | Type | Content (%) | Type | Content (%) | | | | | | |
| 1 | B-13 | 50 | TPGmME | 16 | - | - | OK Top coat+ | C | A | B | B | Present invention |
| 2 | B-13 | 50 | TPGmME | 8 | GP-250 | 8 | OK Top coat+ | C | A | B | B | Present invention |
| 3 | B-28 | 100 | TPGmME | 16 | - | - | OK Top coat+ | B | A | B | B | Present invention |
| 4 | B-28 | 100 | TPGmME | 8 | GP-250 | 8 | OK Top coat+ | B | A | A | B | Present invention |
| 5 | B-25 | 130 | TPGmME | 16 | - | - | OK Top coat+ | B | A | B | B | Present invention |
| 6 | B-25 | 130 | TPGmME | 8 | GP-250 | 8 | OK Top coat+ | B | A | A | A | Present invention |
| 7 | B-22 | 160 | TPGmME | 16 | - | - | OK Top coat+ | A | A | B | B | Present invention |
| 8 | B-22 | 160 | TPGmME | 10 | GP-250 | 6 | OK Top coat+ | A | A | A | A | Present invention |
| 9 | B-22 | 160 | TPGmME | 8 | GP-250 | 8 | OK Top coat+ | A | A | A | A | Present invention |
| 10 | B-22 | 160 | TPGmME | 6 | GP-250 | 10 | OK Top coat+ | B | A | A | A | Present invention |
| 11 | B-20 | 180 | TPGmME | 16 | - | - | OK Top coat+ | A | A | B | B | Present invention |
| 12 | B-20 | 180 | TPGmME | 10 | GP-250 | 6 | OK Top coat+ | A | A | A | A | Present invention |
| 13 | B-20 | 180 | TPGmME | 8 | GP-250 | 8 | OK Top coat+ | A | A | A | A | Present invention |

(continued)

| Ink set | Resin particles | | First solvent | | Second solvent | | Recording medium | Blocking resistance | Scratch resistance | Offset resistance | Image quality | Remarks |
|---|---|---|---|---|---|---|---|---|---|---|---|---|
| | Type | Tg (°C) | Type | Content (%) | Type | Content (%) | | | | | | |
| 14 | B-20 | 180 | TPGmME | 6 | GP-250 | 10 | OK Top coat+ | B | A | A | A | Present invention |
| 1c | B-11 | 20 | TPGmME | 16 | - | - | OK Top coat+ | D | B | D | D | Comp. Ex. |
| 9c | B-20 | 180 | - | - | GP-250 | 16 | OK Top coat+ | B | D | C | C | Comp. Ex. |

Table 3

| Ink set | Resin particles | | First solvent | | Second solvent | | Recording medium | Blocking resistance | Scratch resistance | Offset resistance | Image quality | Remarks |
|---|---|---|---|---|---|---|---|---|---|---|---|---|
| | Type | Tg (°C) | Type | Content (%) | Type | Content (%) | | | | | | |
| 1 | B-13 | 50 | TPGmME | 16 | - | - | U-LIGHT | C | A | B | B | Present invention |
| 2 | B-13 | 50 | TPGmME | 8 | GP-250 | 8 | U-LIGHT | C | A | B | B | Present invention |
| 3 | B-28 | 100 | TPGmME | 16 | - | - | U-LIGHT | B | A | B | B | Present invention |
| 4 | B-28 | 100 | TPGmME | 8 | GP-250 | 8 | U-LIGHT | B | A | A | B | Present invention |
| 5 | B-25 | 130 | TPGmME | 16 | - | - | U-LIGHT | B | A | B | B | Present invention |
| 6 | B-25 | 130 | TPGmME | 8 | GP-250 | 8 | U-LIGHT | B | A | A | A | Present invention |
| 7 | B-22 | 160 | TPGmME | 16 | - | - | U-LIGHT | A | A | B | B | Present invention |
| 8 | B-22 | 160 | TPGmME | 10 | GP-250 | 6 | U-LIGHT | A | A | A | A | Present invention |
| 9 | B-22 | 160 | TPGmME | 8 | GP-250 | 8 | U-LIGHT | A | A | A | A | Present invention |
| 10 | B-22 | 160 | TPGmME | 6 | GP-250 | 10 | U-LIGHT | B | A | A | A | Present invention |
| 11 | B-20 | 180 | TPGmME | 16 | - | - | U-LIGHT | A | A | B | B | Present invention |
| 12 | B-20 | 180 | TPGmME | 10 | GP-250 | 6 | U-LIGHT | A | A | A | A | Present invention |
| 13 | B-20 | 180 | TPGmME | 8 | GP-250 | 8 | U-LIGHT | A | A | A | A | Present invention |

(continued)

| Ink set | Resin particles | | First solvent | | Second solvent | | Recording medium | Blocking resistance | Scratch resistance | Offset resistance | Image quality | Remarks |
|---|---|---|---|---|---|---|---|---|---|---|---|---|
| | Type | Tg (°C) | Type | Content (%) | Type | Content (%) | | | | | | |
| 14 | B-20 | 180 | TPGmME | 6 | GP-250 | 10 | U-LIGHT | B | A | A | A | Present invention |
| 1c | B-11 | 20 | TPGmME | 16 | - | - | U-LIGHT | D | B | D | D | Comp. Ex. |
| 9c | B-20 | 180 | - | - | GP-250 | 16 | U-LIGHT | B | D | C | C | Comp. Ex. |

As shown in Tables 1 to 3, in the image formation using the ink compositions of the invention, line images having a uniform width and a uniform length could be obtained, and when solid recording was performed, images having a uniform and high density with suppressed occurrence of density unevenness could be obtained. Moreover, blocking resistance was also excellent.
In contrast, in the image formation using the ink compositions of the Comparative Examples, density unevenness occurred and the image-rendering properties of line images were poor, and blocking resistance and scratch resistance of images were also poor. In particular, when the glass transition temperature Tg of resin particles was low, the blocking resistance deteriorated. Even when the Tg of resin particles was high, the blocking resistance, scratch resistance, and image evenness were not favorably maintained when using low volatile solvents.
According to the present invention, it is possible to provide an ink composition with which occurrence of blocking in the formed images can be suppressed and which has excellent offset resistance during image formation and excellent scratch resistance of the formed images, an ink set containing the ink composition, and an image forming method.
The present invention includes the following exemplary embodiments. However, the present invention is not limited to the following exemplary embodiments.

<1> An ink composition comprising:

a first solvent having a vapor pressure at 20°C of 0.1 Pa or higher;
resin particles having a glass transition temperature of 50°C or higher; and a coloring material.

<2> The ink composition of <1>, wherein the coloring material is a pigment.
<3> The ink composition of <1> or <2>, wherein the first solvent has a vapor pressure at 20°C of from 0.1 Pa to 15 Pa.
<4> The ink composition of any one of <1> to <3>, wherein the first solvent is a water-soluble solvent having a boiling point at ordinary pressure of from 200°C to 260°C.
<5> The ink composition of any one of <1> to <4>, wherein the first solvent is an alkylene glycol compound.
<6> The ink composition of any one of <1> to <5>, wherein the first solvent is selected from the group consisting of tripropylene glycol monomethyl ether, triethylene glycol monoethyl ether, diethylene glycol monoethyl ether, and dipropylene glycol.
<7> The ink composition of any one of <1> to <6>, further comprising a second solvent having a vapor pressure at 20°C of less than 0.1Pa.
<8> The ink composition of <7>, wherein the second solvent is a water-soluble organic solvent represented by the following Formula (1):

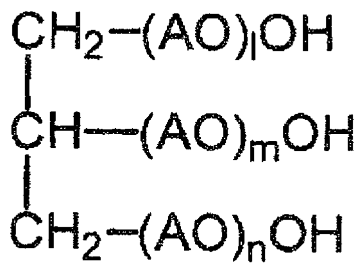

Formula (1)

wherein, in Formula (1), l, m and n are each independently an integer of 1 or more, and the sum of l, m and n is from 3 to 15; AO represents at least one selected from the group consisting of an ethyleneoxy group and a propyleneoxy group; and AO of $(AO)_l$, $(AO)_m$, and $(AO)_n$ may respectively be the same as or different from each other.
<9> An ink set comprising at least one ink composition of any one of <1> to <8>.
<10> An ink-jet image forming method, comprising supplying the ink-composition of any one of <1> to <8> onto a recording medium by an ink-jet method to form an image.

All publications, patent applications, and technical standards mentioned in this specification are herein incorporated by reference to the same extent as if each individual publication, patent application, or technical standard was specifically and individually indicated to be incorporated by reference.

## Claims

1. An ink composition comprising:

   a first solvent having a vapor pressure at 20°C of 0.1 Pa or higher;
   a second solvent having a vapor pressure at 20°C of less than 0.1 Pa;
   resin particles having a glass transition temperature of 50°C or higher; and
   a coloring material.

2. An ink composition according to Claim 1, wherein the coloring material is a pigment.

3. An ink composition according to Claim 1 or Claim 2, wherein the first solvent has a vapor pressure at 20°C of from 0.1 Pa to 15 Pa.

4. An ink composition according to any preceding Claim, wherein the first solvent is a water-soluble solvent having a boiling point at ordinary pressure of from 200°C to 260°C.

5. An ink composition according to any preceding Claim, wherein the first solvent is an alkylene glycol compound.

6. An ink composition according to any preceding Claim, wherein the first solvent is tripropylene glycol monomethyl ether, triethylene glycol monoethyl ether, diethylene glycol monoethyl ether or dipropylene glycol.

7. An ink composition according to Claim 1, wherein the second solvent is a water-soluble organic solvent represented by the following Formula (1):

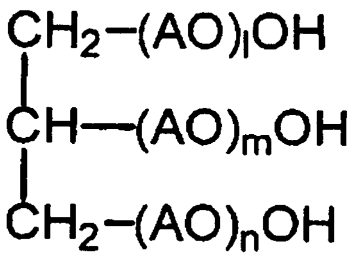

Formula (1)

   wherein 1, m and n are each independently an integer of 1 or more, and the sum of 1, m and n is from 3 to 15; AO represents at least one selected from an ethyleneoxy group and a propyleneoxy group; and AO of $(AO)_l$, $(AO)_m$, and $(AO)_n$ may respectively be the same as or different from each other.

8. An ink composition according to Claim 1, wherein the glass transition temperature of the resin particles is 80°C or higher.

9. An ink set comprising at least one ink composition as defined in any preceding Claim.

10. An ink-jet image forming method comprising supplying an ink-composition as defined in any of Claims 1-8 onto a recording medium by an ink-jet method to form an image.

## Patentansprüche

1. Tintenzusammensetzung, umfassend:

   ein erstes Lösungsmittel mit einem Dampfdruck bei 20°C von 0,1 Pa oder größer;
   ein zweites Lösungsmittel mit einem Dampfdruck bei 20°C von kleiner als 0,1 Pa;
   Harzpartikel, die eine Glasübergangstemperatur von 50°C oder höher aufweisen; und
   ein färbendes Material.

**2.** Tintenzusammensetzung gemäß Anspruch 1, worin das färbende Material ein Pigment ist.

**3.** Tintenzusammensetzung gemäß Anspruch 1 oder Anspruch 2, worin das erste Lösungsmittel einen Dampfdruck bei 20°C von 0,1 Pa bis 15 Pa aufweist.

**4.** Tintenzusammensetzung gemäß irgendeinem vorhergehenden Anspruch, worin das erste Lösungsmittel ein wasserlösliches Lösungsmittel mit einem Siedepunkt bei Normaldruck von 200°C bis 260°C ist.

**5.** Tintenzusammensetzung gemäß irgendeinem vorhergehenden Anspruch, worin das erste Lösungsmittel eine Alkylenglycolverbindung ist.

**6.** Tintenzusammensetzung gemäß irgendeinem vorhergehenden Anspruch, worin das erste Lösungsmittel Tripropylenglycolmonomethylether, Triethylenglycolmonoethylether, Diethylenglycolmonoethylether oder Dipropylenglycol ist.

**7.** Tintenzusammensetzung gemäß Anspruch 1, worin das zweite Lösungsmittel ein wasserlösliches organisches Lösungsmittel ist, das durch die folgende Formel (1) dargestellt wird:

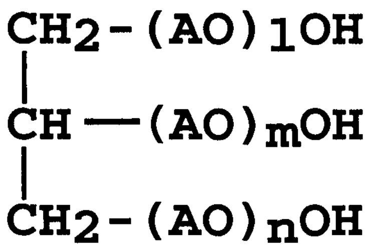

Formel (1)

worin 1, m und n jeweils unabhängig eine ganze Zahl von 1 oder größer sind und die Summe von 1, m und n 3 bis 15 beträgt; AO mindestens eines darstellt, ausgewählt aus einer Ethylenoxygruppe und einer Propylenoxygruppe; und AO von $(AO)_l$, $(AO)_m$ und $(AO)_n$ jeweils gleich oder von den anderen verschieden sein kann.

**8.** Tintenzusammensetzung gemäß Anspruch 1, worin die Glasübergangstemperatur der Harzpartikel 80°C oder höher ist.

**9.** Tintenset, umfassend mindestens eine Tintenzusammensetzung wie in irgendeinem vorhergehenden Anspruch definiert.

**10.** Tintenstrahl-Bilderzeugungsverfahren, umfassend das Zuführen einer Tintenzusammensetzung, wie in irgendeinem der Ansprüche 1 bis 8 definiert, auf ein Aufzeichnungsmedium durch ein Tintenstrahlverfahren, um ein Bild zu erzeugen.

**Revendications**

**1.** Composition d'encre comprenant :

un premier solvant présentant une pression de vapeur à 20°C de 0,1 Pa ou supérieure ;
un second solvant présentant une pression de vapeur à 20°C inférieure à 0,1 Pa ;
des particules de résine présentant une température de transition vitreuse de 50°C ou supérieure ; et
un matériau colorant.

**2.** Composition d'encre selon la revendication 1, dans laquelle le matériau colorant est un pigment.

**3.** Composition d'encre selon la revendication 1 ou la revendication 2, dans laquelle le premier solvant présente une pression de vapeur à 20°C de 0,1 Pa à 15 Pa.

**4.** Composition d'encre selon l'une quelconque des revendications précédentes, dans laquelle le premier solvant est

un solvant soluble dans l'eau présentant un point d'ébullition à pression atmosphérique de 200°C à 260°C.

5. Composition d'encre selon l'une quelconque des revendications précédentes, dans laquelle le premier solvant est un composé d'alkylèneglycol.

6. Composition d'encre selon l'une quelconque des revendications précédentes, dans laquelle le premier solvant est le monométhyléther de tripropylèneglycol, le monoéthyléther de triéthylèneglycol, le monoéthyléther de diéthylèneglycol ou le dipropylèneglycol.

7. Composition d'encre selon la revendication 1, dans laquelle le second solvant est un solvant organique soluble dans l'eau représenté par la formule (1) suivante :

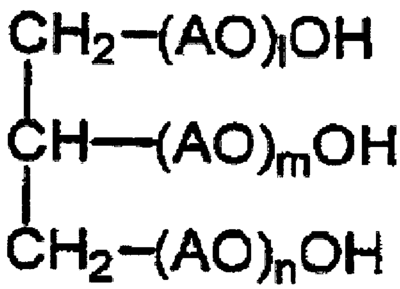

Formule (1)

où l, m et n sont chacun indépendamment un nombre entier de 1 ou supérieur, et la somme de l, m et n est de 3 à 15 ; AO représente au moins un choisi parmi un groupe éthylèneoxy et un groupe propylèneoxy ; et AO de $(AO)_l$, $(AO)_m$, et $(AO)_n$ peuvent être respectivement identiques ou différents les uns des autres.

8. Composition d'encre selon la revendication 1, dans laquelle la température de transition vitreuse des particules de résine est de 80°C ou supérieure.

9. Jeu d'encre comprenant au moins une composition d'encre comme définie dans l'une quelconque des revendications précédentes.

10. Procédé de formation d'une image par jet d'encre comprenant l'introduction d'une composition d'encre comme définie dans l'une quelconque des revendications 1-8 sur un support d'enregistrement par un procédé à jet d'encre pour former une image.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004059933 A
- JP 2005171094 A
- JP 2001181549 A
- JP 2002088294 A
- JP 2001247787 A
- JP 9151342 A
- JP 10140065 A
- JP 11209672 A
- JP 11172180 A
- JP 10025440 A
- JP 11043636 A
- JP 2003306623 A
- JP 54059936 A
- JP 10230201 A
- JP 2004174981 A


### Non-patent literature cited in the description


- Polymer Handbook. Wiley-Interscience, 1989